# EUROPEAN PATENT APPLICATION

(11) **EP 2 868 712 A1**
(43) Date of publication of application: **06.05.2015**
(21) Application number: 13190657.0
(22) Date of filing: 29.10.2013
(51) Int. Cl.: C09B 35/56, C09D 11/00, D21H 21/28

(54) **Metal free acid dyes, process for the production thereof and their use**

(71) Applicant: DyStar Colours Distribution GmbH, 65479 Raunheim (DE)
(72) Inventor: Barbieru, Roxana, Singapore 117468 (SG); Vajiravelu, Sivamurugan, Singapore 120515 (SG); Loh, Wei, Tian, Singapore 768434 (SG)

(57) **Abstract**

Dyes of formula (1) 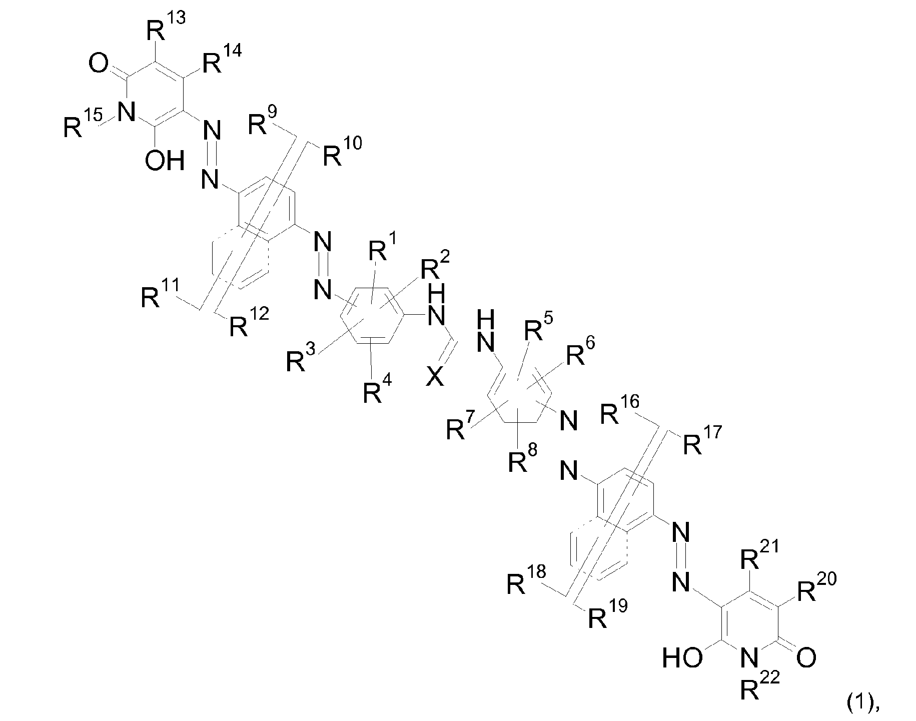 process for their production and their use.

## Description

The present invention relates to the technical field of dyestuffs for dyeing and printing of hydroxyl- and/or carboxamido-containing material.

Acid dyes with bridging groups are known from prior art and can be used as colorants in different applications, see for example GB 1,331,445, DE 34 16 327, US 3,979,378, US 5,543,259, US 2009/207287, WO 2010/000780 and CN 101337925.

However, in the context of the dyeing and printing of hydroxyl-, amino- and/or carboxamido-containing material the known dyes have a number of technical disadvantages, which require improvement.

Surprisingly, it has now been found that the dyes of the formula (1) as described below show highly advantageous properties over the known dyes. These include high tinctorial strength with high brilliancy as well as high fastness properties such as wash, contact and light fastness on the materials mentioned above, on blends containing them as well as on microfibres.

The present invention refers to dyes of formula (1) 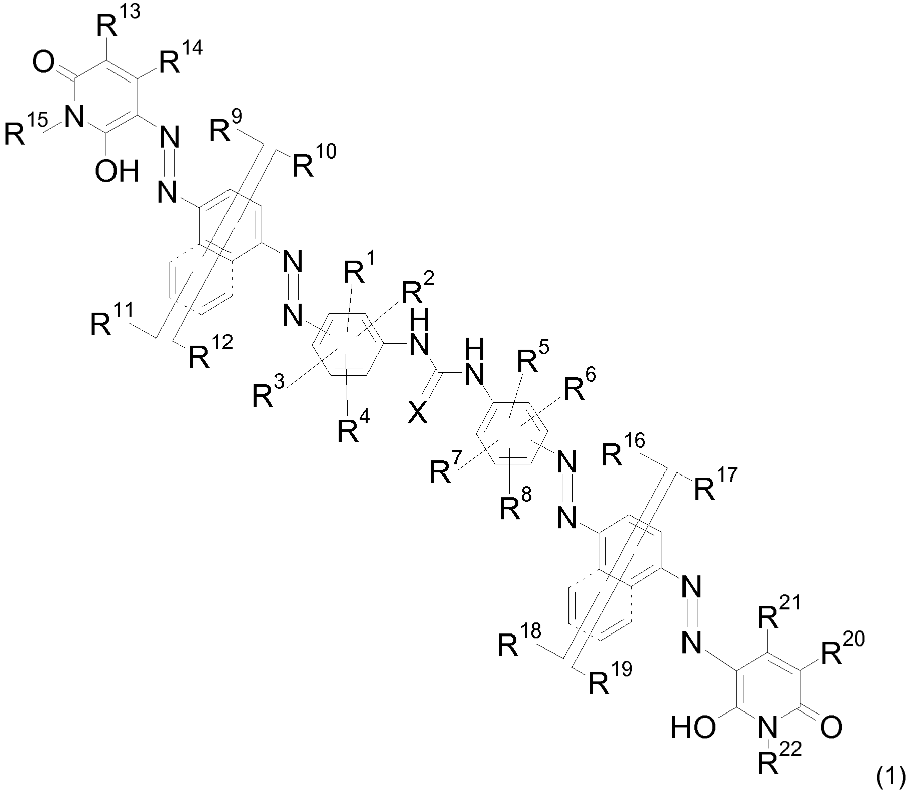 wherein
X is oxygen, sulphur or nitrogen,
R¹, R², R³, R⁴, R⁵, R⁶, R⁷ and R⁸ independent of each other is hydrogen, alkyl, alkoxy, halogen, trifluoromethyl or SO₃M, whereby at least two of them are SO₃M,
R⁹, R¹⁰, R¹¹, R¹², R¹⁶, R¹⁷, R¹⁸, R¹⁹ independent of each other is hydrogen, alkyl, substituted alkyl, alkyl chain interrupted by one or two heteroatoms selected from the group consisting of oxygen and sulphur, alkoxy, substituted alkoxy, halogen, trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, -SO₃M or alkylureido,
R¹³ and R²⁰ independent of each other is cyano, carbamoyl, alkoxycarbonyl, trifluoromethyl, carbonyltrifluoromethyl, alkylsulfonyl, halogen, alkyl sulfonic acid or SO₃M,
R¹⁴ and R²¹ independent of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio
or
is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido
and
R¹⁵ and R²² independent of each other is hydrogen, alkyl, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diaryl-amino, N-alkyl-N-aryl-amino, N-monocycloalkylamino, N,N-dicycloalkylamino, N-alkyl-N-cycloalkyl-amino, N-aryl-N-cycloalkyl-amino, N-heteroarylamino, N-hetero-cycloalkylamino, hydroxyakylsulfonylalkyl
or
alkyl interrupted by one or more heteroatoms selected from the group consisting of oxygen and sulphur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms selected from the group consisting of oxygen and sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
M is hydrogen, an alkali metal, ammonium, one equivalent of an alkali earth metal or a monovalent organic cation
and
the dyes of formula (1) have two to six sulfonic acid groups.

This invention is directed to all tautomeric and geometric isomers of the dyes of formula (1).

Alkyl groups appearing in this invention may be straight-chain or branched and are (C₁-C₁₂)-alkyl groups, preferably (C₁-C₈)-alkyl groups, for example n-butyl, isobutyl, n-pentyl, isopentyl, n-hexyl, 2-ethylhexyl, sec-butyl, tert-butyl and methylbutyl.

The same applies to alkoxy groups, which accordingly are preferably (C₁-C₈)-alkoxy, for example methoxy and ethoxy, to thioalkoxy groups, which are preferably (C₁-C₈)-thioalkoxy, for example -SCH₃ or -SC₂H₅.

Cycloalkyl groups are preferably (C₃-C₈)-cycloalkyl and especially preferably cyclopentyl and cyclohexyl. The term cyloalkyl comprises for the purpose of the present invention substituted cycloalklyl groups and unsatured cycloalkyl groups as well. A preferred group of this type is cyclopentenyl. Preferred substituents are alkyl, hydroxyalkyl, halogen, hydroxyl, alkoxy, acyl, cyano, nitro, amino, monoalkylamino, dialkylamino, mono(hydroxyalkyl)amino, bis (hydroxyalkyl)amino, monoalkyl-mono-(hydroxyalkyl)amino, carbamoyl, sulfamoyl, acylamino, ureido, aminosulfonylamino, alkoxycarbonyl and acyloxy.

Alkenyl groups may be straight-chain or branched and are preferably (C₂-C₆)-groups for example vinyl and allyl. The term alkenyl comprises for the purpose of the present invention alkynyl groups as well, for example ethynyl and propargyl.

Aryl groups appearing in this invention are preferably phenyl or naphthyl. The terms phenyl and naphthyl comprise unsubstituted as well as substituted phenyl and naphthyl. Preferred substituents are alkyl, cycloalkyl, heterocycloalkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono-(hydroxyalkyl)amino, carbamoyl, sulfamoyl, acylamino, ureido, aminosulfonylamino, alkoxycarbonyl and acyloxy.

Heteroaryl groups appearing in this invention are preferably pyridine, pyrimidine, pyridazine, pyrazine, pyrrole, imidazole, pyrazole, 1,2,4-thiadiazole, 1,2,4-triazole, tetrazole, thiophene, thiazole, isothiazole, benzothiazole, benzoisothiazole, 1,3,4-thiadiazole, furane, oxazole, benzoxazole or isoxazole. The term heteroayl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl and acyloxy.

Heterocycloalkyl groups are preferably pyrrolidine, piperidine, morpholine, tetrahydrofuran or piperazine. The term heterocycloalkyl comprises the above groups in unsubstituted as well as in substituted form. Preferred substituents are alkyl, hydroxyalkyl, halogen, hydroxyl, alkoxy, alkylthio, acyl, nitro, cyano, amino, monoalkyl-amino, dialkylamino, mono(hydroxyalkyl)amino, bis (hydroxyalkyl)amino, monoalkyl-mono(hydroxyalkyl)amino, carbamoyl, sulfamoyl, acylamino, aminocarbonylamino, aminosulfonylamino, alkoxycarbonyl and acyloxy.

Halogen is preferably chlorine, bromine or fluorine.

M is preferably hydrogen, lithium, sodium, potassium or mono-, di-, tri- or tetra-(C₁-C₄)-alkylammonium.

Particularly preferred dyes of the present invention are those of formula (1 a) 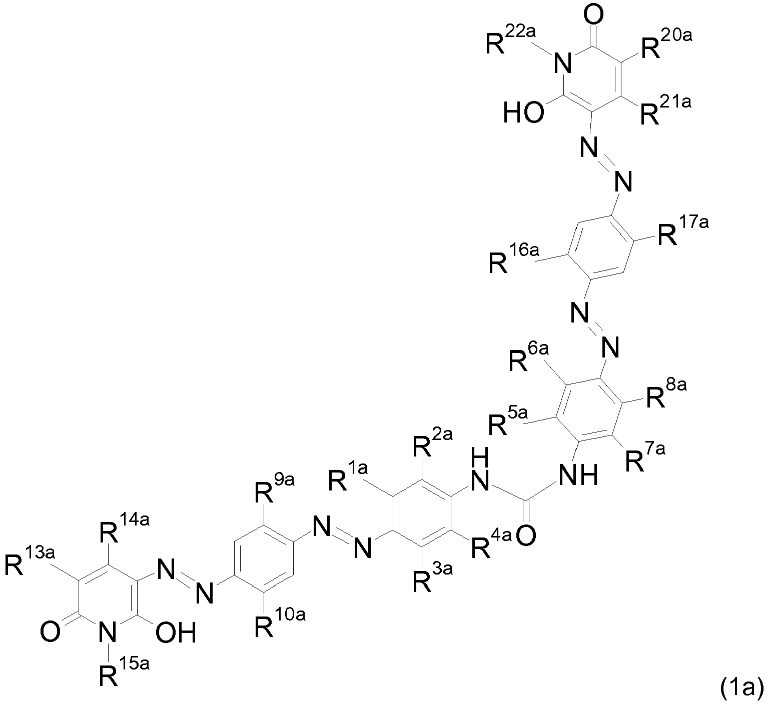 wherein
R^{1a}, R^{2a}, R^{3a}, R^{4a}, R^{5a}, R^{6a}, R^{7a} and R^{8a} independent of each other is hydrogen, alkyl, alkoxy, halogen, trifluoromethyl or SO₃M, whereby at least two of them are SO₃M,
R^{9a}, R^{10a}, R^{16a} and R^{17a} independent of each other is hydrogen, (C₁-C₄)-alkyl, (C₁-C₄)-alkoxy, halogen, trifluoromethyl, -SO₃M or (C₁-C₄)-acylamino,
R^{13a} and R^{20a} independent of each other is cyano, carbamoyl or alkoxycarbonyl,
R^{14a} and R^{21a} independent of each other is unsubstituted, linear or branched (C₁-C₄)-alkyl, unsubstiuted (C₅-C₇)-cycloalkyl or substituted (C₅-C₇)-cycloalkyl with one or more substituents preferably selected from the group consisting of methyl, ethyl, isobutyl, sec-butyl, tert-butyl and methylbutyl,
R^{15a} and R^{22a} independent of each other is hydrogen, alkyl, alkenyl, cycloalkyl, trifluoromethyl, aryl, heteroaryl, heterocycloalkyl, carbamoyl, sulfamoyl, amino, N-acylamino, ureido, alkylureido, phenylureido, N-monoalkylamino, N,N-dialkyl-amino, N-arylamino, N,N-diarylamino, N-alkyl-N-aryl-amino, N-monocycloalkylamino, N,N-dicycloalkylamino, N-alkyl-N-cycloalkyl-amino, N-aryl-N-cycloalkyl-amino, hydroxy-alkylsulfonylalkyl
or
alkyl interrupted by one or more heteroatoms selected from the group consisting of oxygen and sulphur
or
alkyl substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M
or
alkyl interrupted by one or more heteroatoms selected from the group consisting of oxygen and sulphur and substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M
and
M is hydrogen, an alkali metal, ammonium, one equivalent of an alkali earth metal or a monovalent organic cation.

In especially preferred dyes of formula (1 a):
R^{1a} and R^{6a} is SO₃M and R^{2a} and R^{5a} is hydrogen,
or R^{1a} and R^{6a} is hydrogen and R^{2a} and R^{5a} is SO₃M,
R^{3a}, R^{4a}, R^{7a} and R^{8a} is hydrogen,
R^{9a}, R^{10a}, R^{16a} and R^{17a} independent of each other is hydrogen, methyl, halogen, - SO₃M or acetylamino,
R^{13a} and R^{20a} independent of each other is cyano or carbamoyl,
R^{14a} and R^{21a} is methyl,
R^{15a} and R^{22a} independent of each other is methyl, ethyl, butyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentene-2-yl, 2-ethylhexyl, 2,2-dimethylpropyl, phenyl, benzyl, allyl, 2-methoxyethyl, 3-methoxypropyl, 2-cyanoethyl, 2-(methylthio)ethyl, 2-fluoroethyl, 2-chloroethyl, 3-chloropropyl, tetrahydrofurfuryl, 2-furan-2-yl-ethyl, 6-hydroxy-1-[2-(2-hydroxyethylsulfanyl)-ethyl], 2-(2-tertbutylsulfanylethanesulfonyl)-ethyl, 2-(ethylsulfonyl)ethanol, 2-hydroxyethoxypropyl or 2-hydroxyethoxyethyl
and
M is hydrogen, sodium, potassium, lithium or ammonium.

Examples of preferred dyes of formula (1a) are the compounds of formulae (1a¹ to 1 a⁸⁷⁸):

| Structure | R^{1a} | R^{2a} | R^{5a} | R^{6a} | R^{9a}/ R^{16a} | R^{10a}/ R^{17a} | R^{13a}/R^{20a} | R^{14a}/ R^{21a} | R^{15a}/ R^{22a} |
|---|---|---|---|---|---|---|---|---|---|
| 1a¹ | H | SO₃H | SO₃H | H | Methyl | Methyl | CN | Methyl | Methyl |
| 1a² | SO₃H | H | H | SO₃H | | | | | |
| 1a³ | H | SO₃H | SO₃H | H | Methyl | Methyl | CN | Methyl | Ethyl |
| 1a⁴ | SO₃H | H | H | SO₃H | | | | | |
| 1a⁵ | H | SO₃H | SO₃H | H | Methyl | Methyl | CN | Methyl | Propyl |
| 1a⁶ | SO₃H | H | H | SO₃H | | | | | |
| 1a⁷ | H | SO₃H | SO₃H | H | Methyl | Methyl | CN | Methyl | Butyl |
| 1a⁸ | SO₃H | H | H | SO₃H | | | | | |
| 1a⁹ | H | SO₃H | SO₃H | H | Methyl | Methyl | CN | Methyl | Pentyl |
| 1a¹⁰ | SO₃H | H | H | SO₃H | | | | | |
| 1a¹¹ | H | SO₃H | SO₃H | H | Methyl | Methyl | CN | Methyl | Cyclobutyl |
| 1a¹² | SO₃H | H | H | SO₃H | | | | | |
| 1a¹³ | H | SO₃H | SO₃H | H | Methyl | Methyl | CN | Methyl | Cyclopentyl |
| 1a¹⁴ | SO₃H | H | H | SO₃H | | | | | |
| 1a¹⁵ | H | SO₃H | SO₃H | H | Methyl | Methyl | CN | Methyl | Cyclohexyl |
| 1a¹⁶ | SO₃H | H | H | SO₃H | | | | | |
| 1a¹⁷ | H | SO₃H | SO₃H | H | Methyl | Methyl | CN | Methyl | 2-Methyl cyclohexyl |
| 1a¹⁸ | SO₃H | H | H | SO₃H | | | | | |
| 1a¹⁹ | H | SO₃H | SO₃H | H | Methyl | Methyl | CN | Methyl | 3-Methyl cyclohexyl |
| 1a²⁰ | SO₃H | H | H | SO₃H | | | | | |
| 1a²¹ | H | SO₃H | SO₃H | H | Methyl | Methyl | CN | Methyl | Isopropyl |
| 1a²² | SO₃H | H | H | SO₃H | | | | | |
| 1a²³ | H | SO₃H | SO₃H | H | Methyl | Methyl | CN | Methyl | Sec-butyl |
| 1a²⁴ | SO₃H | H | H | SO₃H | | | | | |
| 1a²⁵ | H | SO₃H | SO₃H | H | Methyl | Methyl | CN | Methyl | 2-Methyl butyl |
| 1a²⁶ | SO₃H | H | H | SO₃H | | | | | |
| 1a²⁷ | H | SO₃H | SO₃H | H | Methyl | Methyl | CN | Methyl | 1-Ethylpropyl |
| 1a²⁸ | SO₃H | H | H | SO₃H | | | | | |
| 1a²⁹ | H | SO₃H | SO₃H | H | Methyl | Methyl | CN | Methyl | 1,2-Dimethyl propyl |
| 1a³⁰ | SO₃H | H | H | SO₃H | | | | | |
| 1a³¹ | H | SO₃H | SO₃H | H | Methyl | Methyl | CN | Methyl | Tert-butyl |
| 1a³² | SO₃H | H | H | SO₃H | | | | | |
| 1a³³ | H | SO₃H | SO₃H | H | Methyl | Methyl | CN | Methyl | 3-Methyl butyl |
| 1a³⁴ | SO₃H | H | H | SO₃H | | | | | |
| 1a³⁵ | H | SO₃H | SO₃H | H | Methyl | Methyl | CN | Methyl | Pentan-2-yl |
| 1a³⁶ | SO₃H | H | H | SO₃H | | | | | |
| 1a³⁷ | H | SO₃H | SO₃H | H | Methyl | Methyl | CN | Methyl | 2-Ethylhexyl |
| 1a³⁸ | SO₃H | H | H | SO₃H | | | | | |
| 1a³⁹ | H | SO₃H | SO₃H | H | Methyl | Methyl | CN | Methyl | 2,2-Dimethyl propyl |
| 1a⁴⁰ | SO₃H | H | H | SO₃H | | | | | |
| 1a⁴¹ | H | SO₃H | SO₃H | H | Methyl | Methyl | CN | Methyl | Phenyl |
| 1a⁴² | SO₃H | H | H | SO₃H | | | | | |
| 1a⁴³ | H | SO₃H | SO₃H | H | Methyl | Methyl | CN | Methyl | Benzyl |
| 1a⁴⁴ | SO₃H | H | H | SO₃H | | | | | |
| 1a⁴⁵ | H | SO₃H | SO₃H | H | Methyl | F | CN | Methyl | Methyl |
| 1a⁴⁶ | SO₃H | H | H | SO₃H | | | | | |
| 1a⁴⁷ | H | SO₃H | SO₃H | H | Methyl | F | CN | Methyl | Ethyl |
| 1a⁴⁸ | SO₃H | H | H | SO₃H | | | | | |
| 1a⁴⁹ | H | SO₃H | SO₃H | H | Methyl | F | CN | Methyl | Propyl |
| 1a⁵⁰ | SO₃H | H | H | SO₃H | | | | | |
| 1a⁵¹ | H | SO₃H | SO₃H | H | Methyl | F | CN | Methyl | Butyl |
| 1a⁵² | SO₃H | H | H | SO₃H | | | | | |
| 1a⁵³ | H | SO₃H | SO₃H | H | Methyl | F | CN | Methyl | Pentyl |
| 1a⁵⁴ | SO₃H | H | H | SO₃H | | | | | |
| 1a⁵⁵ | H | SO₃H | SO₃H | H | Methyl | F | CN | Methyl | Cyclobutyl |
| 1a⁵⁶ | SO₃H | H | H | SO₃H | | | | | |
| 1a⁵⁷ | H | SO₃H | SO₃H | H | Methyl | F | CN | Methyl | Cyclopentyl |
| 1a⁵⁸ | SO₃H | H | H | SO₃H | | | | | |
| 1a⁵⁹ | H | SO₃H | SO₃H | H | Methyl | F | CN | Methyl | Cyclohexyl |
| 1a⁶⁰ | SO₃H | H | H | SO₃H | | | | | |
| 1a⁶¹ | H | SO₃H | SO₃H | H | Methyl | F | CN | Methyl | 2-Methyl cyclohexyl |
| 1a⁶² | SO₃H | H | H | SO₃H | | | | | |
| 1a⁶³ | H | SO₃H | SO₃H | H | Methyl | F | CN | Methyl | 3-Methyl cyclohexyl |
| 1a⁶⁴ | SO₃H | H | H | SO₃H | | | | | |
| 1a⁶⁵ | H | SO₃H | SO₃H | H | Methyl | F | CN | Methyl | Isopropyl |
| 1a⁶⁶ | SO₃H | H | H | SO₃H | | | | | |
| 1a⁶⁷ | H | SO₃H | SO₃H | H | Methyl | F | CN | Methyl | Sec-butyl |
| 1a⁶⁸ | SO₃H | H | H | SO₃H | | | | | |
| 1a⁶⁹ | H | SO₃H | SO₃H | H | Methyl | F | CN | Methyl | 2-Methyl butyl |
| 1a⁷⁰ | SO₃H | H | H | SO₃H | | | | | |
| 1a⁷¹ | H | SO₃H | SO₃H | H | Methyl | F | CN | Methyl | 1-Ethylpropyl |
| 1a⁷² | SO₃H | H | H | SO₃H | | | | | |
| 1a⁷³ | H | SO₃H | SO₃H | H | Methyl | F | CN | Methyl | 1,2-Dimethyl propyl |
| 1a⁷⁴ | SO₃H | H | H | SO₃H | | | | | |
| 1a⁷⁵ | H | SO₃H | SO₃H | H | Methyl | F | CN | Methyl | Tert-butyl |
| 1a⁷⁶ | SO₃H | H | H | SO₃H | | | | | |
| 1a⁷⁷ | H | SO₃H | SO₃H | H | Methyl | F | CN | Methyl | 3-Methyl butyl |
| 1a⁷⁸ | SO₃H | H | H | SO₃H | | | | | |
| 1a⁷⁹ | H | SO₃H | SO₃H | H | Methyl | F | CN | Methyl | Pentan-2-yl |
| 1a⁸⁰ | SO₃H | H | H | SO₃H | | | | | |
| 1a⁸¹ | H | SO₃H | SO₃H | H | Methyl | F | CN | Methyl | 2-Ethylhexyl |
| 1a⁸² | SO₃H | H | H | SO₃H | | | | | |
| 1a⁸³ | H | SO₃H | SO₃H | H | Methyl | F | CN | Methyl | 2,2-Dimethyl propyl |
| 1a⁸⁴ | SO₃H | H | H | SO₃H | | | | | |
| 1a⁸⁵ | H | SO₃H | SO₃H | H | Methyl | F | CN | Methyl | Phenyl |
| 1a⁸⁶ | SO₃H | H | H | SO₃H | | | | | |
| 1a⁸⁷ | H | SO₃H | SO₃H | H | Methyl | F | CN | Methyl | Benzyl |
| 1a⁸⁸ | SO₃H | H | H | SO₃H | | | | | |
| 1a⁸⁹ | H | SO₃H | SO₃H | H | NHCOCH₃ | OMe | CN | Methyl | Methyl |
| 1a⁹⁰ | SO₃H | H | H | SO₃H | | | | | |
| 1a⁹¹ | H | SO₃H | SO₃H | H | NHCOCH₃ | OMe | CN | Methyl | Ethyl |
| 1a⁹² | SO₃H | H | H | SO₃H | | | | | |
| 1a⁹³ | H | SO₃H | SO₃H | H | NHCOCH₃ | OMe | CN | Methyl | Propyl |
| 1a⁹⁴ | SO₃H | H | H | SO₃H | | | | | |
| 1a⁹⁵ | H | SO₃H | SO₃H | H | NHCOCH₃ | OMe | CN | Methyl | Butyl |
| 1a⁹⁶ | SO₃H | H | H | SO₃H | | | | | |
| 1a⁹⁷ | H | SO₃H | SO₃H | H | NHCOCH₃ | OMe | CN | Methyl | Pentyl |
| 1a⁹⁸ | SO₃H | H | H | SO₃H | | | | | |
| 1a⁹⁹ | H | SO₃H | SO₃H | H | NHCOCH₃ | OMe | CN | Methyl | Cyclobutyl |
| 1a¹⁰⁰ | SO₃H | H | H | SO₃H | | | | | |
| 1a¹⁰¹ | H | SO₃H | SO₃H | H | NHCOCH₃ | OMe | CN | Methyl | Cyclopentyl |
| 1a¹⁰² | SO₃H | H | H | SO₃H | | | | | |
| 1a¹⁰³ | H | SO₃H | SO₃H | H | NHCOCH₃ | OMe | CN | Methyl | Cyclohexyl |
| 1a¹⁰⁴ | SO₃H | H | H | SO₃H | | | | | |
| 1a¹⁰⁵ | H | SO₃H | SO₃H | H | NHCOCH₃ | OMe | CN | Methyl | 2-Methyl cyclohexyl |
| 1a¹⁰⁶ | SO₃H | H | H | SO₃H | | | | | |
| 1a¹⁰⁷ | H | SO₃H | SO₃H | H | NHCOCH₃ | OMe | CN | Methyl | 3-Methyl cyclohexyl |
| 1a¹⁰⁸ | SO₃H | H | H | SO₃H | | | | | |
| 1a¹⁰⁹ | H | SO₃H | SO₃H | H | NHCOCH₃ | OMe | CN | Methyl | Isopropyl |
| 1a¹¹⁰ | SO₃H | H | H | SO₃H | | | | | |
| 1a¹¹¹ | H | SO₃H | SO₃H | H | NHCOCH₃ | OMe | CN | Methyl | Sec-butyl |
| 1a¹¹² | SO₃H | H | H | SO₃H | | | | | |
| 1a¹¹³ | H | SO₃H | SO₃H | H | NHCOCH₃ | OMe | CN | Methyl | 2-Methyl butyl |
| 1a¹¹⁴ | SO₃H | H | H | SO₃H | | | | | |
| 1a¹¹⁵ | H | SO₃H | SO₃H | H | NHCOCH₃ | OMe | CN | Methyl | 1-Ethylpropyl |
| 1a¹¹⁶ | SO₃H | H | H | SO₃H | | | | | |
| 1a¹¹⁷ | H | SO₃H | SO₃H | H | NHCOCH₃ | OMe | CN | Methyl | 1,2-Dimethyl propyl |
| 1a¹¹⁸ | SO₃H | H | H | SO₃H | | | | | |
| 1a¹¹⁹ | H | SO₃H | SO₃H | H | NHCOCH₃ | OMe | CN | Methyl | Tert-butyl |
| 1a¹²⁰ | SO₃H | H | H | SO₃H | | | | | |
| 1a¹²¹ | H | SO₃H | SO₃H | H | NHCOCH₃ | OMe | CN | Methyl | 3-Methyl butyl |
| 1a¹²² | SO₃H | H | H | SO₃H | | | | | |
| 1a¹²³ | H | SO₃H | SO₃H | H | NHCOCH₃ | OMe | CN | Methyl | Pentan-2-yl |
| 1a¹²⁴ | SO₃H | H | H | SO₃H | | | | | |
| 1a¹²⁵ | H | SO₃H | SO₃H | H | NHCOCH₃ | OMe | CN | Methyl | 2-Ethylhexyl |
| 1a¹²⁶ | SO₃H | H | H | SO₃H | | | | | |
| 1a¹²⁷ | H | SO₃H | SO₃H | H | NHCOCH₃ | OMe | CN | Methyl | 2,2-Dimethyl propyl |
| 1a¹²⁸ | SO₃H | H | H | SO₃H | | | | | |
| 1a¹²⁹ | H | SO₃H | SO₃H | H | NHCOCH₃ | OMe | CN | Methyl | Phenyl |
| 1a¹³⁰ | SO₃H | H | H | SO₃H | | | | | |
| 1a¹³¹ | H | SO₃H | SO₃H | H | NHCOCH₃ | OMe | CN | Methyl | Benzyl |
| 1a¹³² | SO₃H | H | H | SO₃H | | | | | |
| 1a¹³³ | H | SO₃H | SO₃H | H | Methyl | Methyl | CN | Methyl | Allyl |
| 1a¹³⁴ | SO₃H | H | H | SO₃H | | | | | |
| 1a¹³⁵ | H | SO₃H | SO₃H | H | Methyl | Methyl | CN | Methyl | 2-Methoxy ethyl |
| 1a¹³⁶ | SO₃H | H | H | SO₃H | | | | | |
| 1a¹³⁷ | H | SO₃H | SO₃H | H | Methyl | Methyl | CN | Methyl | 3-Methoxy propyl |
| 1a¹³⁸ | SO₃H | H | H | SO₃H | | | | | |
| 1a¹³⁹ | H | SO₃H | SO₃H | H | Methyl | Methyl | CN | Methyl | 2-Hydroxyethyl |
| 1a¹⁴⁰ | SO₃H | H | H | SO₃H | | | | | |
| 1a¹⁴¹ | H | SO₃H | SO₃H | H | Methyl | Methyl | CN | Methyl | 2-Fluoroethyl |
| 1a¹⁴² | SO₃H | H | H | SO₃H | | | | | |
| 1a¹⁴³ | H | SO₃H | SO₃H | H | Methyl | Methyl | CN | Methyl | 2-Chloroethyl |
| 1a¹⁴⁴ | SO₃H | H | H | SO₃H | | | | | |
| 1a¹⁴⁵ | H | SO₃H | SO₃H | H | Methyl | Methyl | CN | Methyl | 3-Chloropropyl |
| 1a¹⁴⁶ | SO₃H | H | H | SO₃H | | | | | |
| 1a¹⁴⁷ | H | SO₃H | SO₃H | H | Methyl | Methyl | CN | Methyl | 2-Ethylhexyl |
| 1a¹⁴⁸ | SO₃H | H | H | SO₃H | | | | | |
| 1a¹⁴⁹ | H | SO₃H | SO₃H | H | Methyl | Methyl | CN | Methyl | 6-Hydroxy-1-[2-(2-hydroxy-ethyl sulfanyl)-ethyl] |
| 1a¹⁵⁰ | SO₃H | H | H | SO₃H | | | | | |
| 1a¹⁵¹ | H | SO₃H | SO₃H | H | Methyl | Methyl | CN | Methyl | 2-Hydroxy ethoxy propyl |
| 1a¹⁵² | SO₃H | H | H | SO₃H | | | | | |
| 1a¹⁵³ | H | SO₃H | SO₃H | H | Methyl | Methyl | CN | Methyl | 2-Hydroxy ethoxyethyl |
| 1a¹⁵⁴ | SO₃H | H | H | SO₃H | | | | | |
| 1a¹⁵⁵ | H | SO₃H | SO₃H | H | Methyl | Methyl | CN | Methyl | 2-(Ethyl sulfonyl) ethanol |
| 1a¹⁵⁶ | SO₃H | H | H | SO₃H | | | | | |
| 1a¹⁵⁷ | H | SO₃H | SO₃H | H | Methyl | Methyl | CN | Methyl | 3-Isopropoxy propyl |
| 1a¹⁵⁸ | SO₃H | H | H | SO₃H | | | | | |
| 1a¹⁵⁹ | H | SO₃H | SO₃H | H | Methyl | Methyl | CN | Methyl | 3-Ethoxypropyl |
| 1a¹⁶⁰ | SO₃H | H | H | SO₃H | | | | | |
| 1a¹⁶¹ | H | SO₃H | SO₃H | H | Methyl | Methyl | CN | Methyl | 3-Ethoxybutyl |
| 1a¹⁶² | SO₃H | H | H | SO₃H | | | | | |
| 1a¹⁶³ | H | SO₃H | SO₃H | H | Methyl | Methyl | CN | Methyl | 3-Methyl phenyl |
| 1a¹⁶⁴ | SO₃H | H | H | SO₃H | | | | | |
| 1a¹⁶⁵ | H | SO₃H | SO₃H | H | Methyl | Methyl | CN | Methyl | 2-Methyl phenyl |
| 1a¹⁶⁶ | SO₃H | H | H | SO₃H | | | | | |
| 1a¹⁶⁷ | H | SO₃H | SO₃H | H | Methyl | Methyl | CN | Methyl | 4-Methyl phenyl |
| 1a¹⁶⁸ | SO₃H | H | H | SO₃H | | | | | |
| 1a¹⁶⁹ | H | SO₃H | SO₃H | H | Methyl | Methyl | CN | Methyl | 2-Methoxy phenyl |
| 1a¹⁷⁰ | SO₃H | H | H | SO₃H | | | | | |
| 1a¹⁷¹ | H | SO₃H | SO₃H | H | Methyl | Methyl | CN | Methyl | 3-Methoxy phenyl |
| 1a¹⁷² | SO₃H | H | H | SO₃H | | | | | |
| 1a¹⁷³ | H | SO₃H | SO₃H | H | Methyl | Methyl | CN | Methyl | 4-Methoxy phenyl |
| 1a¹⁷⁴ | SO₃H | H | H | SO₃H | | | | | |
| 1a¹⁷⁵ | H | SO₃H | SO₃H | H | Methyl | Methyl | CN | Methyl | 2-Chlorophenyl |
| 1a¹⁷⁶ | SO₃H | H | H | SO₃H | | | | | |
| 1a¹⁷⁷ | H | SO₃H | SO₃H | H | Methyl | Methyl | CN | Methyl | 3-Chlorophenyl |
| 1a¹⁷⁸ | SO₃H | H | H | SO₃H | | | | | |
| 1a¹⁷⁹ | H | SO₃H | SO₃H | H | Methyl | Methyl | CN | Methyl | 4-Chlorophenyl |
| 1a¹⁸⁰ | SO₃H | H | H | SO₃H | | | | | |
| 1a¹⁸¹ | H | SO₃H | SO₃H | H | Methyl | Methyl | CN | Methyl | 2-Fluorophenyl |
| 1a¹⁸² | SO₃H | H | H | SO₃H | | | | | |
| 1a¹⁸³ | H | SO₃H | SO₃H | H | Methyl | Methyl | CN | Methyl | 3-Fluorophenyl |
| 1a¹⁸⁴ | SO₃H | H | H | SO₃H | | | | | |
| 1a¹⁸⁵ | H | SO₃H | SO₃H | H | Methyl | Methyl | CN | Methyl | 4-Fluorophenyl |
| 1a¹⁸⁶ | SO₃H | H | H | SO₃H | | | | | |
| 1a¹⁸⁷ | H | SO₃H | SO₃H | H | Methyl | Methyl | CN | Methyl | 3-Phenyl sulfonamide |
| 1a¹⁸⁸ | SO₃H | H | H | SO₃H | | | | | |
| 1a¹⁸⁹ | H | SO₃H | SO₃H | H | Methyl | Methyl | CN | Methyl | 2-Aminophenyl |
| 1a¹⁹⁰ | SO₃H | H | H | SO₃H | | | | | |
| 1a¹⁹¹ | H | SO₃H | SO₃H | H | Methyl | Methyl | CN | Methyl | 3-Aminophenyl |
| 1a¹⁹² | SO₃H | H | H | SO₃H | | | | | |
| 1a¹⁹³ | H | SO₃H | SO₃H | H | Methyl | Methyl | CN | Methyl | 4-Aminophenyl |
| 1a¹⁹⁴ | SO₃H | H | H | SO₃H | | | | | |
| 1a¹⁹⁵ | H | SO₃H | SO₃H | H | Methyl | F | CN | Methyl | 2-Methoxy ethyl |
| 1a¹⁹⁶ | SO₃H | H | H | SO₃H | | | | | |
| 1a¹⁹⁷ | H | SO₃H | SO₃H | H | Methyl | F | CN | Methyl | 3-Methoxy propyl |
| 1a¹⁹⁸ | SO₃H | H | H | SO₃H | | | | | |
| 1a¹⁹⁹ | H | SO₃H | SO₃H | H | Methyl | F | CN | Methyl | 2-Hydroxyethyl |
| 1a²⁰⁰ | SO₃H | H | H | SO₃H | | | | | |
| 1a²⁰¹ | H | SO₃H | SO₃H | H | Methyl | F | CN | Methyl | 2-Fluoroethyl |
| 1a²⁰² | SO₃H | H | H | SO₃H | | | | | |
| 1a²⁰³ | H | SO₃H | SO₃H | H | Methyl | F | CN | Methyl | 2-Chloroethyl |
| 1a²⁰⁴ | SO₃H | H | H | SO₃H | | | | | |
| 1a²⁰⁵ | H | SO₃H | SO₃H | H | Methyl | F | CN | Methyl | 3-Chloropropyl |
| 1a²⁰⁶ | SO₃H | H | H | SO₃H | | | | | |
| 1a²⁰⁷ | H | SO₃H | SO₃H | H | Methyl | F | CN | Methyl | 2-Ethylhexyl |
| 1a²⁰⁸ | SO₃H | H | H | SO₃H | | | | | |
| 1a²⁰⁹ | H | SO₃H | SO₃H | H | Methyl | F | CN | Methyl | 6-Hydroxy-1-[2-(2-hydroxyethyl sulfanyl)-ethyl] |
| 1a²¹⁰ | SO₃H | H | H | SO₃H | | | | | |
| 1a²¹¹ | H | SO₃H | SO₃H | H | Methyl | F | CN | Methyl | 2-Hydroxy ethoxy propyl |
| 1a²¹² | SO₃H | H | H | SO₃H | | | | | |
| 1a²¹³ | H | SO₃H | SO₃H | H | Methyl | F | CN | Methyl | 2-Hydroxy ethoxyethyl |
| 1a²¹⁴ | SO₃H | H | H | SO₃H | | | | | |
| 1a²¹⁵ | H | SO₃H | SO₃H | H | Methyl | F | CN | Methyl | 2-(Ethyl sulfonyl) ethanol |
| 1a²¹⁶ | SO₃H | H | H | SO₃H | | | | | |
| 1a²¹⁷ | H | SO₃H | SO₃H | H | Methyl | F | CN | Methyl | 3-isopropoxy-propyl |
| 1a²¹⁸ | SO₃H | H | H | SO₃H | | | | | |
| 1a²¹⁹ | H | SO₃H | SO₃H | H | Methyl | F | CN | Methyl | 3-Ethoxy-propyl |
| 1a²²⁰ | SO₃H | H | H | SO₃H | | | | | |
| 1a²²¹ | H | SO₃H | SO₃H | H | Methyl | F | CN | Methyl | 4-Ethoxybutyl |
| 1a²²² | SO₃H | H | H | SO₃H | | | | | |
| 1a²²³ | H | SO₃H | SO₃H | H | Methyl | F | CN | Methyl | 3-Methyl phenyl |
| 1a²²⁴ | SO₃H | H | H | SO₃H | | | | | |
| 1a²²⁵ | H | SO₃H | SO₃H | H | Methyl | F | CN | Methyl | 2-Methyl phenyl |
| 1a²²⁶ | SO₃H | H | H | SO₃H | | | | | |
| 1a²²⁷ | H | SO₃H | SO₃H | H | Methyl | F | CN | Methyl | 4-Methyl phenyl |
| 1a²²⁸ | SO₃H | H | H | SO₃H | | | | | |
| 1a²²⁹ | H | SO₃H | SO₃H | H | Methyl | F | CN | Methyl | 2-Methoxy phenyl |
| 1a²³⁰ | SO₃H | H | H | SO₃H | | | | | |
| 1a²³¹ | H | SO₃H | SO₃H | H | Methyl | F | CN | Methyl | 3-Methoxy phenyl |
| 1a²³² | SO₃H | H | H | SO₃H | | | | | |
| 1a²³³ | H | SO₃H | SO₃H | H | Methyl | F | CN | Methyl | 4-Methoxy phenyl |
| 1a²³⁴ | SO₃H | H | H | SO₃H | | | | | |
| 1a²³⁵ | H | SO₃H | SO₃H | H | Methyl | F | CN | Methyl | 2-Chlorophenyl |
| 1a²³⁶ | SO₃H | H | H | SO₃H | | | | | |
| 1a²³⁷ | H | SO₃H | SO₃H | H | Methyl | F | CN | Methyl | 3-Chlorophenyl |
| 1a²³⁸ | SO₃H | H | H | SO₃H | | | | | |
| 1a²³⁹ | H | SO₃H | SO₃H | H | Methyl | F | CN | Methyl | 4-Chlorophenyl |
| 1a²⁴⁰ | SO₃H | H | H | SO₃H | | | | | |
| 1a²⁴¹ | H | SO₃H | SO₃H | H | Methyl | F | CN | Methyl | 2-Fluorophenyl |
| 1a²⁴² | SO₃H | H | H | SO₃H | | | | | |
| 1a²⁴³ | H | SO₃H | SO₃H | H | Methyl | F | CN | Methyl | 3-Fluorophenyl |
| 1a²⁴⁴ | SO₃H | H | H | SO₃H | | | | | |
| 1a²⁴⁵ | H | SO₃H | SO₃H | H | Methyl | F | CN | Methyl | 4-Fluorophenyl |
| 1a²⁴⁶ | SO₃H | H | H | SO₃H | | | | | |
| 1a²⁴⁷ | H | SO₃H | SO₃H | H | Methyl | F | CN | Methyl | 3-Phenyl sulfonamide |
| 1a²⁴⁸ | SO₃H | H | H | SO₃H | | | | | |
| 1a²⁴⁹ | H | SO₃H | SO₃H | H | Methyl | F | CN | Methyl | 2-Aminophenyl |
| 1a²⁵⁰ | SO₃H | H | H | SO₃H | | | | | |
| 1a²⁵¹ | H | SO₃H | SO₃H | H | Methyl | F | CN | Methyl | 3-Aminophenyl |
| 1a²⁵² | SO₃H | H | H | SO₃H | | | | | |
| 1a²⁵³ | H | SO₃H | SO₃H | H | Methyl | F | CN | Methyl | 4-Aminophenyl |
| 1a²⁵⁴ | SO₃H | H | H | SO₃H | | | | | |
| 1a²⁵⁵ | H | SO₃H | SO₃H | H | NHCOCH₃ | OMe | CN | Methyl | 2-Methoxy ethyl |
| 1a²⁵⁶ | SO₃H | H | H | SO₃H | | | | | |
| 1a²⁵⁷ | H | SO₃H | SO₃H | H | NHCOCH₃ | OMe | CN | Methyl | 3-Methoxy propyl |
| 1a²⁵⁸ | SO₃H | H | H | SO₃H | | | | | |
| 1a²⁵⁹ | H | SO₃H | SO₃H | H | NHCOCH₃ | OMe | CN | Methyl | 2-Hydroxyethyl |
| 1a²⁶⁰ | SO₃H | H | H | SO₃H | | | | | |
| 1a²⁶¹ | H | SO₃H | SO₃H | H | NHCOCH₃ | OMe | CN | Methyl | 2-Fluoroethyl |
| 1a²⁶² | SO₃H | H | H | SO₃H | | | | | |
| 1a²⁶³ | H | SO₃H | SO₃H | H | NHCOCH₃ | OMe | CN | Methyl | 2-Chloroethyl |
| 1a²⁶⁴ | SO₃H | H | H | SO₃H | | | | | |
| 1a²⁶⁵ | H | SO₃H | SO₃H | H | NHCOCH₃ | OMe | CN | Methyl | 3-Chloropropyl |
| 1a²⁶⁶ | SO₃H | H | H | SO₃H | | | | | |
| 1a²⁶⁷ | H | SO₃H | SO₃H | H | NHCOCH₃ | OMe | CN | Methyl | 2-Ethylhexyl |
| 1a²⁶⁸ | SO₃H | H | H | SO₃H | | | | | |
| 1a²⁶⁹ | H | SO₃H | SO₃H | H | NHCOCH₃ | OMe | CN | Methyl | 6-Hydroxy-1-[2-(2-hydroxy-ethyl sulfanyl)-ethyl] |
| 1a²⁷⁰ | SO₃H | H | H | SO₃H | | | | | |
| 1a²⁷¹ | H | SO₃H | SO₃H | H | NHCOCH₃ | OMe | CN | Methyl | 2-Hydroxy ethoxy propyl |
| 1a²⁷² | SO₃H | H | H | SO₃H | | | | | |
| 1a²⁷³ | H | SO₃H | SO₃H | H | NHCOCH₃ | OMe | CN | Methyl | 2-Hydroxy ethoxyethyl |
| 1a²⁷⁴ | SO₃H | H | H | SO₃H | | | | | |
| 1a²⁷⁵ | H | SO₃H | SO₃H | H | NHCOCH₃ | OMe | CN | Methyl | 2-(Ethyl sulfonyl) ethanol |
| 1a²⁷⁶ | SO₃H | H | H | SO₃H | | | | | |
| 1a⁷⁷⁷ | H | SO₃H | SO₃H | H | NHCOCH₃ | OMe | CN | Methyl | 3-isopropoxy-propyl |
| 1a²⁷⁸ | SO₃H | H | H | SO₃H | | | | | |
| 1a²⁷⁹ | H | SO₃H | SO₃H | H | NHCOCH₃ | OMe | CN | Methyl | 3-Ethoxy-propyl |
| 1a²⁸⁰ | SO₃H | H | H | SO₃H | | | | | |
| 1a²⁸¹ | H | SO₃H | SO₃H | H | NHCOCH₃ | OMe | CN | Methyl | 4-Ethoxybutyl |
| 1a²⁸² | SO₃H | H | H | SO₃H | | | | | |
| 1a²⁸³ | H | SO₃H | SO₃H | H | NHCOCH₃ | OMe | CN | Methyl | 3-Methyl phenyl |
| 1a²⁸⁴ | SO₃H | H | H | SO₃H | | | | | |
| 1a²⁸⁵ | H | SO₃H | SO₃H | H | NHCOCH₃ | OMe | CN | Methyl | 2-Methyl phenyl |
| 1a²⁸⁶ | SO₃H | H | H | SO₃H | | | | | |
| 1a²⁸⁷ | H | SO₃H | SO₃H | H | NHCOCH₃ | OMe | CN | Methyl | 4-Methyl phenyl |
| 1a²⁸⁸ | SO₃H | H | H | SO₃H | | | | | |
| 1a²⁸⁹ | H | SO₃H | SO₃H | H | NHCOCH₃ | OMe | CN | Methyl | 2-Methoxy phenyl |
| 1a²⁹⁰ | SO₃H | H | H | SO₃H | | | | | |
| 1a²⁹¹ | H | SO₃H | SO₃H | H | NHCOCH₃ | OMe | CN | Methyl | 3-Methoxy phenyl |
| 1a²⁹² | SO₃H | H | H | SO₃H | | | | | |
| 1a²⁹³ | H | SO₃H | SO₃H | H | NHCOCH₃ | OMe | CN | Methyl | 4-Methoxy phenyl |
| 1a²⁹⁴ | SO₃H | H | H | SO₃H | | | | | |
| 1a²⁹⁵ | H | SO₃H | SO₃H | H | NHCOCH₃ | OMe | CN | Methyl | 2-Chlorophenyl |
| 1a²⁹⁶ | SO₃H | H | H | SO₃H | | | | | |
| 1a²⁹⁷ | H | SO₃H | SO₃H | H | NHCOCH₃ | OMe | CN | Methyl | 3-Chlorophenyl |
| 1a²⁹⁸ | SO₃H | H | H | SO₃H | | | | | |
| 1a²⁹⁹ | H | SO₃H | SO₃H | H | NHCOCH₃ | OMe | CN | Methyl | 4-Chlorophenyl |
| 1a³⁰⁰ | SO₃H | H | H | SO₃H | | | | | |
| 1a³⁰¹ | H | SO₃H | SO₃H | H | NHCOCH₃ | OMe | CN | Methyl | 2-Fluorophenyl |
| 1a³⁰² | SO₃H | H | H | SO₃H | | | | | |
| 1a³⁰³ | H | SO₃H | SO₃H | H | NHCOCH₃ | OMe | CN | Methyl | 3-Fluorophenyl |
| 1a³⁰⁴ | SO₃H | H | H | SO₃H | | | | | |
| 1a³⁰⁵ | H | SO₃H | SO₃H | H | NHCOCH₃ | OMe | CN | Methyl | 4-Fluorophenyl |
| 1a³⁰⁶ | SO₃H | H | H | SO₃H | | | | | |
| 1a³⁰⁷ | H | SO₃H | SO₃H | H | NHCOCH₃ | OMe | CN | Methyl | 3-Phenyl sulfonamide |
| 1a³⁰⁸ | SO₃H | H | H | SO₃H | | | | | |
| 1a³⁰⁹ | H | SO₃H | SO₃H | H | NHCOCH₃ | OMe | CN | Methyl | 2-Aminophenyl |
| 1a³¹⁰ | SO₃H | H | H | SO₃H | | | | | |
| 1a³¹¹ | H | SO₃H | SO₃H | H | NHCOCH₃ | OMe | CN | Methyl | 3-Aminophenyl |
| 1a³¹² | SO₃H | H | H | SO₃H | | | | | |
| 1a³¹³ | H | SO₃H | SO₃H | H | NHCOCH₃ | OMe | CN | Methyl | 4-Aminophenyl |
| 1a⁵¹⁴ | SO₃H | H | H | SO₃H | | | | | |
| 1a³¹⁵ | H | SO₃H | SO₃H | H | Methyl | Methyl | CONH₂ | Methyl | Methyl |
| 1a³¹⁶ | SO₃H | H | H | SO₃H | | | | | |
| 1a³¹⁷ | H | SO₃H | SO₃H | H | Methyl | Methyl | CONH₂ | Methyl | Ethyl |
| 1a³¹⁸ | SO₃H | H | H | SO₃H | | | | | |
| 1a³¹⁹ | H | SO₃H | SO₃H | H | Methyl | Methyl | CONH₂ | Methyl | Propyl |
| 1a³²⁰ | SO₃H | H | H | SO₃H | | | | | |
| 1a³²¹ | H | SO₃H | SO₃H | H | Methyl | Methyl | CONH₂ | Methyl | Butyl |
| 1a³²² | SO₃H | H | H | SO₃H | | | | | |
| 1a³²³ | H | SO₃H | SO₃H | H | Methyl | Methyl | CONH₂ | Methyl | Pentyl |
| 1a³²⁴ | SO₃H | H | H | SO₃H | | | | | |
| 1a³²⁵ | H | SO₃H | SO₃H | H | Methyl | Methyl | CONH₂ | Methyl | Cyclobutyl |
| 1a³²⁶ | SO₃H | H | H | SO₃H | | | | | |
| 1a³²⁷ | H | SO₃H | SO₃H | H | Methyl | Methyl | CONH₂ | Methyl | Cyclopentyl |
| 1a³²⁸ | SO₃H | H | H | SO₃H | | | | | |
| 1a³²⁹ | H | SO₃H | SO₃H | H | Methyl | Methyl | CONH₂ | Methyl | Cyclohexyl |
| 1a³³⁰ | SO₃H | H | H | SO₃H | | | | | |
| 1a³³¹ | H | SO₃H | SO₃H | H | Methyl | Methyl | CONH₂ | Methyl | 2-Methyl cyclohexyl |
| 1a³³² | SO₃H | H | H | SO₃H | | | | | |
| 1a³³³ | H | SO₃H | SO₃H | H | Methyl | Methyl | CONH₂ | Methyl | 3-Methyl cyclohexyl |
| 1a³³⁴ | SO₃H | H | H | SO₃H | | | | | |
| 1a³³⁵ | H | SO₃H | SO₃H | H | Methyl | Methyl | CONH₂ | Methyl | Isopropyl |
| 1a³³⁶ | SO₃H | H | H | SO₃H | | | | | |
| 1a³³⁷ | H | SO₃H | SO₃H | H | Methyl | Methyl | CONH₂ | Methyl | Sec-butyl |
| 1a³³⁸ | SO₃H | H | H | SO₃H | | | | | |
| 1a³³⁹ | H | SO₃H | SO₃H | H | Methyl | Methyl | CONH₂ | Methyl | 2-Methyl butyl |
| 1a³⁴⁰ | SO₃H | H | H | SO₃H | | | | | |
| 1a³⁴¹ | H | SO₃H | SO₃H | H | Methyl | Methyl | CONH₂ | Methyl | 1-Ethylpropyl |
| 1a³⁴² | SO₃H | H | H | SO₃H | | | | | |
| 1a³⁴³ | H | SO₃H | SO₃H | H | Methyl | Methyl | CONH₂ | Methyl | 1,2-Dimethyl propyl |
| 1a³⁴⁴ | SO₃H | H | H | SO₃H | | | | | |
| 1a³⁴⁵ | H | SO₃H | SO₃H | H | Methyl | Methyl | CONH₂ | Methyl | Tert-butyl |
| 1a³⁴⁶ | SO₃H | H | H | SO₃H | | | | | |
| 1a³⁴⁷ | H | SO₃H | SO₃H | H | Methyl | Methyl | CONH₂ | Methyl | 3-Methyl butyl |
| 1a³⁴⁸ | SO₃H | H | H | SO₃H | | | | | |
| 1a³⁴⁹ | H | SO₃H | SO₃H | H | Methyl | Methyl | CONH₂ | Methyl | Pentan-2-yl |
| 1a³⁵⁰ | SO₃H | H | H | SO₃H | | | | | |
| 1a³⁵¹ | H | SO₃H | SO₃H | H | Methyl | Methyl | CONH₂ | Methyl | 2-Ethylhexyl |
| 1a³⁵² | SO₃H | H | H | SO₃H | | | | | |
| 1a³⁵³ | H | SO₃H | SO₃H | H | Methyl | Methyl | CONH₂ | Methyl | 2,2-Dimethyl propyl |
| 1a³⁵⁴ | SO₃H | H | H | SO₃H | | | | | |
| 1a³⁵⁵ | H | SO₃H | SO₃H | H | Methyl | Methyl | CONH₂ | Methyl | Phenyl |
| 1a³⁵⁶ | SO₃H | H | H | SO₃H | | | | | |
| 1a³⁵⁷ | H | SO₃H | SO₃H | H | Methyl | Methyl | CONH₂ | Methyl | Benzyl |
| 1a³⁵⁸ | SO₃H | H | H | SO₃H | | | | | |
| 1a³⁵⁹ | H | SO₃H | SO₃H | H | Methyl | F | CONH₂ | Methyl | Methyl |
| 1a³⁶⁰ | SO₃H | H | H | SO₃H | | | | | |
| 1a³⁶¹ | H | SO₃H | SO₃H | H | Methyl | F | CONH₂ | Methyl | Ethyl |
| 1a³⁶² | SO₃H | H | H | SO₃H | | | | | |
| 1a³⁶³ | H | SO₃H | SO₃H | H | Methyl | F | CONH₂ | Methyl | Propyl |
| 1a³⁶⁴ | SO₃H | H | H | SO₃H | | | | | |
| 1a³⁶⁵ | H | SO₃H | SO₃H | H | Methyl | F | CONH₂ | Methyl | Butyl |
| 1a³⁶⁶ | SO₃H | H | H | SO₃H | | | | | |
| 1a³⁶⁷ | H | SO₃H | SO₃H | H | Methyl | F | CONH₂ | Methyl | Pentyl |
| 1a³⁶⁸ | SO₃H | H | H | SO₃H | | | | | |
| 1a³⁶⁹ | H | SO₃H | SO₃H | H | Methyl | F | CONH₂ | Methyl | Cyclobutyl |
| 1a³⁷⁰ | SO₃H | H | H | SO₃H | | | | | |
| 1a³⁷¹ | H | SO₃H | SO₃H | H | Methyl | F | CONH₂ | Methyl | Cyclopentyl |
| 1a³⁷² | SO₃H | H | H | SO₃H | | | | | |
| 1a³⁷³ | H | SO₃H | SO₃H | H | Methyl | F | CONH₂ | Methyl | Cyclohexyl |
| 1a³⁷⁴ | SO₃H | H | H | SO₃H | | | | | |
| 1a³⁷⁵ | H | SO₃H | SO₃H | H | Methyl | F | CONH₂ | Methyl | 2-Methyl cyclohexyl |
| 1a³⁷⁶ | SO₃H | H | H | SO₃H | | | | | |
| 1a³⁷⁷ | H | SO₃H | SO₃H | H | Methyl | F | CONH₂ | Methyl | 3-Methyl cyclohexyl |
| 1a³⁷⁸ | SO₃H | H | H | SO₃H | | | | | |
| 1a³⁷⁹ | H | SO₃H | SO₃H | H | Methyl | F | CONH₂ | Methyl | Isopropyl |
| 1a³⁸⁰ | SO₃H | H | H | SO₃H | | | | | |
| 1a³⁸¹ | H | SO₃H | SO₃H | H | Methyl | F | CONH₂ | Methyl | Sec-butyl |
| 1a³⁸² | SO₃H | H | H | SO₃H | | | | | |
| 1a³⁸³ | H | SO₃H | SO₃H | H | Methyl | F | CONH₂ | Methyl | 2-Methyl butyl |
| 1a³⁸⁴ | SO₃H | H | H | SO₃H | | | | | |
| 1a³⁸⁵ | H | SO₃H | SO₃H | H | Methyl | F | CONH₂ | Methyl | 1-Ethylpropyl |
| 1a³⁸⁶ | SO₃H | H | H | SO₃H | | | | | |
| 1a³⁸⁷ | H | SO₃H | SO₃H | H | Methyl | F | CONH₂ | Methyl | 1,2-Dimethyl propyl |
| 1a³⁸⁸ | SO₃H | H | H | SO₃H | | | | | |
| 1a³⁸⁹ | H | SO₃H | SO₃H | H | Methyl | F | CONH₂ | Methyl | Tert-butyl |
| 1a³⁹⁰ | SO₃H | H | H | SO₃H | | | | | |
| 1a³⁹¹ | H | SO₃H | SO₃H | H | Methyl | F | CONH₂ | Methyl | 3-Methyl butyl |
| 1a³⁹² | SO₃H | H | H | SO₃H | | | | | |
| 1a³⁹³ | H | SO₃H | SO₃H | H | Methyl | F | CONH₂ | Methyl | Pentan-2-yl |
| 1a³⁹⁴ | SO₃H | H | H | SO₃H | | | | | |
| 1a³⁹⁵ | H | SO₃H | SO₃H | H | Methyl | F | CONH₂ | Methyl | 2-Ethylhexyl |
| 1a³⁹⁶ | SO₃H | H | H | SO₃H | | | | | |
| 1a³⁹⁷ | H | SO₃H | SO₃H | H | Methyl | F | CONH₂ | Methyl | 2,2-Dimethyl |
| 1a³⁹⁸ | SO₃H | H | H | SO₃H | | | | | propyl |
| 1a³⁹⁹ | H | SO₃H | SO₃H | H | Methyl | F | CONH₂ | Methyl | Phenyl |
| 1a⁴⁰⁰ | SO₃H | H | H | SO₃H | | | | | |
| 1a⁴⁰¹ | H | SO₃H | SO₃H | H | Methyl | F | CONH₂ | Methyl | Benzyl |
| 1a⁴⁰² | SO₃H | H | H | SO₃H | | | | | |
| 1a⁴⁰³ | H | SO₃H | SO₃H | H | NHCOCH₃ | OMe | CONH₂ | Methyl | Methyl |
| 1a⁴⁰⁴ | SO₃H | H | H | SO₃H | | | | | |
| 1a⁴⁰⁵ | H | SO₃H | SO₃H | H | NHCOCH₃ | OMe | CONH₂ | Methyl | Ethyl |
| 1a⁴⁰⁶ | SO₃H | H | H | SO₃H | | | | | |
| 1a⁴⁰⁷ | H | SO₃H | SO₃H | H | NHCOCH₃ | OMe | CONH₂ | Methyl | Propyl |
| 1a⁴⁰⁸ | SO₃H | H | H | SO₃H | | | | | |
| 1a⁴⁰⁹ | H | SO₃H | SO₃H | H | NHCOCH₃ | OMe | CONH₂ | Methyl | Butyl |
| 1a⁴¹⁰ | SO₃H | H | H | SO₃H | | | | | |
| 1a⁴¹¹ | H | SO₃H | SO₃H | H | NHCOCH₃ | OMe | CONH₂ | Methyl | Pentyl |
| 1a⁴¹² | SO₃H | H | H | SO₃H | | | | | |
| 1a⁴¹³ | H | SO₃H | SO₃H | H | NHCOCH₃ | OMe | CONH₂ | Methyl | Cyclobutyl |
| 1a⁴¹⁴ | SO₃H | H | H | SO₃H | | | | | |
| 1a⁴¹⁵ | H | SO₃H | SO₃H | H | NHCOCH₃ | OMe | CONH₂ | Methyl | Cyclopentyl |
| 1a⁴¹⁶ | SO₃H | H | H | SO₃H | | | | | |
| 1a⁴¹⁷ | H | SO₃H | SO₃H | H | NHCOCH₃ | OMe | CONH₂ | Methyl | Cyclohexyl |
| 1a⁴¹⁸ | SO₃H | H | H | SO₃H | | | | | |
| 1a⁴¹⁹ | H | SO₃H | SO₃H | H | NHCOCH₃ | OMe | CONH₂ | Methyl | 2-Methyl cyclohexyl |
| 1a⁴²⁰ | SO₃H | H | H | SO₃H | | | | | |
| 1a⁴²¹ | H | SO₃H | SO₃H | H | NHCOCH₃ | OMe | CONH₂ | Methyl | 3-Methyl cyclohexyl |
| 1a⁴²² | SO₃H | H | H | SO₃H | | | | | |
| 1a⁴²³ | H | SO₃H | SO₃H | H | NHCOCH₃ | OMe | CONH₂ | Methyl | Isopropyl |
| 1a⁴²⁴ | SO₃H | H | H | SO₃H | | | | | |
| 1a⁴²⁵ | H | SO₃H | SO₃H | H | NHCOCH₃ | OMe | CONH₂ | Methyl | Sec-butyl |
| 1a⁴²⁶ | SO₃H | H | H | SO₃H | | | | | |
| 1a⁴²⁷ | H | SO₃H | SO₃H | H | NHCOCH₃ | OMe | CONH₂ | Methyl | 2-Methyl butyl |
| 1a⁴²⁸ | SO₃H | H | H | SO₃H | | | | | |
| 1a⁴²⁹ | H | SO₃H | SO₃H | H | NHCOCH₃ | OMe | CONH₂ | Methyl | 1-Ethylpropyl |
| 1a⁴³⁰ | SO₃H | H | H | SO₃H | | | | | |
| 1a⁴³¹ | H | SO₃H | SO₃H | H | NHCOCH₃ | OMe | CONH₂ | Methyl | 1,2-Dimethyl propyl |
| 1a⁴³² | SO₃H | H | H | SO₃H | | | | | |
| 1a⁴³³ | H | SO₃H | SO₃H | H | NHCOCH₃ | OMe | CONH₂ | Methyl | Tert-butyl |
| 1a⁴³⁴ | SO₃H | H | H | SO₃H | | | | | |
| 1a⁴³⁵ | H | SO₃H | SO₃H | H | NHCOCH₃ | OMe | CONH₂ | Methyl | 3-Methyl butyl |
| 1a⁴³⁶ | SO₃H | H | H | SO₃H | | | | | |
| 1a⁴³⁷ | H | SO₃H | SO₃H | H | NHCOCH₃ | OMe | CONH₂ | Methyl | Pentan-2-yl |
| 1a⁴³⁸ | SO₃H | H | H | SO₃H | | | | | |
| 1a⁴³⁹ | H | SO₃H | SO₃H | H | NHCOCH₃ | OMe | CONH₂ | Methyl | 2-Ethylhexyl |
| 1a⁴⁴⁰ | SO₃H | H | H | SO₃H | | | | | |
| 1a⁴⁴¹ | H | SO₃H | SO₃H | H | NHCOCH₃ | OMe | CONH₂ | Methyl | 2,2-Dimethyl propyl |
| 1a⁴⁴² | SO₃H | H | H | SO₃H | | | | | |
| 1a⁴⁴³ | H | SO₃H | SO₃H | H | NHCOCH₃ | OMe | CONH₂ | Methyl | Phenyl |
| 1a⁴⁴⁴ | SO₃H | H | H | SO₃H | | | | | |
| 1a⁴⁴⁵ | H | SO₃H | SO₃H | H | NHCOCH₃ | OMe | CONH₂ | Methyl | Benzyl |
| 1a⁴⁴⁶ | SO₃H | H | H | SO₃H | | | | | |
| 1a⁴⁴⁷ | H | SO₃H | SO₃H | H | Methyl | Methyl | CN | Methyl | Allyl |
| 1a⁴⁴⁸ | SO₃H | H | H | SO₃H | | | | | |
| 1a⁴⁴⁹ | H | SO₃H | SO₃H | H | Methyl | Methyl | CN | Methyl | 2-Methoxy ethyl |
| 1a⁴⁵⁰ | SO₃H | H | H | SO₃H | | | | | |
| 1a⁴⁵¹ | H | SO₃H | SO₃H | H | Methyl | Methyl | CN | Methyl | 3-Methoxy propyl |
| 1a⁴⁵² | SO₃H | H | H | SO₃H | | | | | |
| 1a⁴⁵³ | H | SO₃H | SO₃H | H | Methyl | Methyl | CN | Methyl | 2-Cyanoethyl |
| 1a⁴⁵⁴ | SO₃H | H | H | SO₃H | | | | | |
| 1a⁴⁵⁵ | H | SO₃H | SO₃H | H | Methyl | Methyl | CN | Methyl | 2-(Methylthio) ethyl |
| 1a⁴⁵⁶ | SO₃H | H | H | SO₃H | | | | | |
| 1a⁴⁵⁷ | H | SO₃H | SO₃H | H | Methyl | Methyl | CN | Methyl | 2-Hydroxyethyl |
| 1a⁴⁵⁸ | SO₃H | H | H | SO₃H | | | | | |
| 1a⁴⁵⁹ | H | SO₃H | SO₃H | H | Methyl | Methyl | CN | Methyl | 2-Fluoroethyl |
| 1a⁴⁶⁰ | SO₃H | H | H | SO₃H | | | | | |
| 1a⁴⁶¹ | H | SO₃H | SO₃H | H | Methyl | Methyl | CN | Methyl | 2-Chloroethyl |
| 1a⁴⁶² | SO₃H | H | H | SO₃H | | | | | |
| 1a⁴⁶³ | H | SO₃H | SO₃H | H | Methyl | Methyl | CN | Methyl | 3-Chloropropyl |
| 1a⁴⁶⁴ | SO₃H | H | H | SO₃H | | | | | |
| 1a⁴⁶⁵ | H | SO₃H | SO₃H | H | Methyl | Methyl | CN | Methyl | Tetrahydro furfuryl |
| 1a⁴⁶⁶ | SO₃H | H | H | SO₃H | | | | | |
| 1a⁴⁶⁷ | H | SO₃H | SO₃H | H | Methyl | Methyl | CN | Methyl | 2-Furan-2-yl-ethyl |
| 1a⁴⁶⁸ | SO₃H | H | H | SO₃H | | | | | |
| 1a⁴⁶⁹ | H | SO₃H | SO₃H | H | Methyl | Methyl | CN | Methyl | 2-Ethylhexyl |
| 1a⁴⁷⁰ | SO₃H | H | H | SO₃H | | | | | |
| 1a⁴⁷¹ | H | SO₃H | SO₃H | H | Methyl | Methyl | CN | Methyl | 6-Hydroxy-1-[2-(2-hydroxy-ethyl sulfanyl)-ethyl] |
| 1a⁴⁷² | SO₃H | H | H | SO₃H | | | | | |
| 1a⁴⁷³ | H | SO₃H | SO₃H | H | Methyl | Methyl | CN | Methyl | 2-(2-tert-Butylsulfanyl-ethanesulfonyl )-ethyl |
| 1a⁴⁷⁴ | SO₃H | H | H | SO₃H | | | | | |
| 1a⁴⁷⁵ | H | SO₃H | SO₃H | H | Methyl | Methyl | CN | Methyl | 2-Hydroxy ethoxy propyl |
| 1a⁴⁷⁶ | SO₃H | H | H | SO₃H | | | | | |
| 1a⁴⁷⁷ | H | SO₃H | SO₃H | H | Methyl | Methyl | CN | Methyl | 2-Hydroxy ethoxyethyl |
| 1a⁴⁷⁸ | SO₃H | H | H | SO₃H | | | | | |
| 1a⁴⁷⁹ | H | SO₃H | SO₃H | H | Methyl | Methyl | CN | Methyl | 2-(Ethyl sulfonyl) ethanol |
| 1a⁴⁸⁰ | SO₃H | H | H | SO₃H | | | | | |
| 1a⁴⁸¹ | H | SO₃H | SO₃H | H | Methyl | Methyl | CN | Methyl | 3-Isopropoxypro pyl |
| 1a⁴⁸² | SO₃H | H | H | SO₃H | | | | | |
| 1a⁴⁸³ | H | SO₃H | SO₃H | H | Methyl | Methyl | CN | Methyl | 3-Ethoxypropyl |
| 1a⁴⁸⁴ | SO₃H | H | H | SO₃H | | | | | |
| 1a⁴⁸⁵ | H | SO₃H | SO₃H | H | Methyl | Methyl | CN | Methyl | 4-Ethoxybutyl |
| 1a⁴⁸⁶ | SO₃H | H | H | SO₃H | | | | | |
| 1a⁴⁸⁷ | H | SO₃H | SO₃H | H | Methyl | Methyl | CN | Methyl | 3-Methyl phenyl |
| 1a⁴⁸⁸ | SO₃H | H | H | SO₃H | | | | | |
| 1a⁴⁸⁹ | H | SO₃H | SO₃H | H | Methyl | Methyl | CN | Methyl | 2-Methyl phenyl |
| 1a⁴⁹⁰ | SO₃H | H | H | SO₃H | | | | | |
| 1a⁴⁹¹ | H | SO₃H | SO₃H | H | Methyl | Methyl | CN | Methyl | 4-Methyl phenyl |
| 1a⁴⁹² | SO₃H | H | H | SO₃H | | | | | |
| 1a⁴⁹³ | H | SO₃H | SO₃H | H | Methyl | Methyl | CN | Methyl | 2-Methoxy phenyl |
| 1a⁴⁹⁴ | SO₃H | H | H | SO₃H | | | | | |
| 1a⁴⁹⁵ | H | SO₃H | SO₃H | H | Methyl | Methyl | CN | Methyl | 3-Methoxy phenyl |
| 1a⁴⁹⁶ | SO₃H | H | H | SO₃H | | | | | |
| 1a⁴⁹⁷ | H | SO₃H | SO₃H | H | Methyl | Methyl | CN | Methyl | 4-Methoxy phenyl |
| 1a⁴⁹⁸ | SO₃H | H | H | SO₃H | | | | | |
| 1a⁴⁹⁹ | H | SO₃H | SO₃H | H | Methyl | Methyl | CN | Methyl | 2-Chlorophenyl |
| 1a⁵⁰⁰ | SO₃H | H | H | SO₃H | | | | | |
| 1a⁵⁰¹ | H | SO₃H | SO₃H | H | Methyl | Methyl | CN | Methyl | 3-Chlorophenyl |
| 1a⁵⁰² | SO₃H | H | H | SO₃H | | | | | |
| 1a⁵⁰³ | H | SO₃H | SO₃H | H | Methyl | Methyl | CN | Methyl | 4-Chlorophenyl |
| 1a⁵⁰⁴ | SO₃H | H | H | SO₃H | | | | | |
| 1a⁵⁰⁵ | H | SO₃H | SO₃H | H | Methyl | Methyl | CN | Methyl | 2-Fluorophenyl |
| 1a⁵⁰⁶ | SO₃H | H | H | SO₃H | | | | | |
| 1a⁵⁰⁷ | H | SO₃H | SO₃H | H | Methyl | Methyl | CN | Methyl | 3-Fluorophenyl |
| 1a⁵⁰⁸ | SO₃H | H | H | SO₃H | | | | | |
| 1a⁵⁰⁹ | H | SO₃H | SO₃H | H | Methyl | Methyl | CN | Methyl | 4-Fluorophenyl |
| 1a⁵¹⁰ | SO₃H | H | H | SO₃H | | | | | |
| 1a⁵¹¹ | H | SO₃H | SO₃H | H | Methyl | Methyl | CN | Methyl | 3-Phenyl sulfonamide |
| 1a⁵¹² | SO₃H | H | H | SO₃H | | | | | |
| 1a⁵¹³ | H | SO₃H | SO₃H | H | Methyl | Methyl | CN | Methyl | 2-Aminophenyl |
| 1a⁵¹⁴ | SO₃H | H | H | SO₃H | | | | | |
| 1a⁵¹⁵ | H | SO₃H | SO₃H | H | Methyl | Methyl | CN | Methyl | 3-Aminophenyl |
| 1a⁵¹⁶ | SO₃H | H | H | SO₃H | | | | | |
| 1a⁵¹⁷ | H | SO₃H | SO₃H | H | Methyl | Methyl | CN | Methyl | 4-Aminophenyl |
| 1a⁵¹⁸ | SO₃H | H | H | SO₃H | | | | | |
| 1a⁵¹⁹ | H | SO₃H | SO₃H | H | Methyl | F | CN | Methyl | Allyl |
| 1a⁵²⁰ | SO₃H | H | H | SO₃H | | | | | |
| 1a⁵²¹ | H | SO₃H | SO₃H | H | Methyl | F | CN | Methyl | 2-Methoxy ethyl |
| 1a⁵²² | SO₃H | H | H | SO₃H | | | | | |
| 1a⁵²³ | H | SO₃H | SO₃H | H | Methyl | F | CN | Methyl | 3-Methoxy propyl |
| 1a⁵²⁴ | SO₃H | H | H | SO₃H | | | | | |
| 1a⁵²⁵ | H | SO₃H | SO₃H | H | Methyl | F | CN | Methyl | 2-Cyanoethyl |
| 1a⁵²⁶ | SO₃H | H | H | SO₃H | | | | | |
| 1a⁵²⁷ | H | SO₃H | SO₃H | H | Methyl | F | CN | Methyl | 2-(Methylthio) ethyl |
| 1a⁵²⁸ | SO₃H | H | H | SO₃H | | | | | |
| 1a⁵²⁹ | H | SO₃H | SO₃H | H | Methyl | F | CN | Methyl | 2-Hydroxyethyl |
| 1a⁵³⁰ | SO₃H | H | H | SO₃H | | | | | |
| 1a⁵³¹ | H | SO₃H | SO₃H | H | Methyl | F | CN | Methyl | 2-Fluoroethyl |
| 1a⁵³² | SO₃H | H | H | SO₃H | | | | | |
| 1a⁵³³ | H | SO₃H | SO₃H | H | Methyl | F | CN | Methyl | 2-Chloroethyl |
| 1a⁵³⁴ | SO₃H | H | H | SO₃H | | | | | |
| 1a⁵³⁵ | H | SO₃H | SO₃H | H | Methyl | F | CN | Methyl | 3-Chloropropyl |
| 1a⁵³⁶ | SO₃H | H | H | SO₃H | | | | | |
| 1a⁵³⁷ | H | SO₃H | SO₃H | H | Methyl | F | CN | Methyl | Tetrahydro furfuryl |
| 1a⁵³⁸ | SO₃H | H | H | SO₃H | | | | | |
| 1a⁵³⁹ | H | SO₃H | SO₃H | H | Methyl | F | CN | Methyl | 2-Furan-2-yl-ethyl |
| 1a⁵⁴⁰ | SO₃H | H | H | SO₃H | | | | | |
| 1a⁵⁴¹ | H | SO₃H | SO₃H | H | Methyl | F | CN | Methyl | 2-Ethylhexyl |
| 1a⁵⁴² | SO₃H | H | H | SO₃H | | | | | |
| 1a⁵⁴³ | H | SO₃H | SO₃H | H | Methyl | F | CN | Methyl | 6-Hydroxy-1-[2-(2-hydroxy-ethyl sulfanyl)-ethyl] |
| 1a⁵⁴⁴ | SO₃H | H | H | SO₃H | | | | | |
| 1a⁵⁴⁵ | H | SO₃H | SO₃H | H | Methyl | F | CN | Methyl | 2-(2-tert-Butylsulfanyl-ethanesulfonyl )-ethyl |
| 1a⁵⁴⁶ | SO₃H | H | H | SO₃H | | | | | |
| 1a⁵⁴⁷ | H | SO₃H | SO₃H | H | Methyl | F | CN | Methyl | 2-Hydroxy ethoxy propyl |
| 1a⁵⁴⁸ | SO₃H | H | H | SO₃H | | | | | |
| 1a⁵⁴⁹ | H | SO₃H | SO₃H | H | Methyl | F | CN | Methyl | 2-Hydroxy ethoxyethyl |
| 1a⁵⁵⁰ | SO₃H | H | H | SO₃H | | | | | |
| 1a⁵⁵¹ | H | SO₃H | SO₃H | H | Methyl | F | CN | Methyl | 2-(Ethyl sulfonyl) ethanol |
| 1a⁵⁵² | SO₃H | H | H | SO₃H | | | | | |
| 1a⁵⁵³ | H | SO₃H | SO₃H | H | Methyl | F | CN | Methyl | 3-Isopropoxypro pyl |
| 1a⁵⁵⁴ | SO₃H | H | H | SO₃H | | | | | |
| 1a⁵⁵⁵ | H | SO₃H | SO₃H | H | Methyl | F | CN | Methyl | 3-Ethoxypropyl |
| 1a⁵⁵⁶ | SO₃H | H | H | SO₃H | | | | | |
| 1a⁵⁵⁷ | H | SO₃H | SO₃H | H | Methyl | F | CN | Methyl | 3-Ethoxybutyl |
| 1a⁵⁵⁸ | SO₃H | H | H | SO₃H | | | | | |
| 1a⁵⁵⁹ | H | SO₃H | SO₃H | H | Methyl | F | CN | Methyl | 3-Methyl phenyl |
| 1a⁵⁶⁰ | SO₃H | H | H | SO₃H | | | | | |
| 1a⁵⁶¹ | H | SO₃H | SO₃H | H | Methyl | F | CN | Methyl | 2-Methyl phenyl |
| 1a⁵⁶² | SO₃H | H | H | SO₃H | | | | | |
| 1a⁵⁶³ | H | SO₃H | SO₃H | H | Methyl | F | CN | Methyl | 4-Methyl phenyl |
| 1a⁵⁶⁴ | SO₃H | H | H | SO₃H | | | | | |
| 1a⁵⁶⁵ | H | SO₃H | SO₃H | H | Methyl | F | CN | Methyl | 2-Methoxy phenyl |
| 1a⁵⁶⁶ | SO₃H | H | H | SO₃H | | | | | |
| 1a⁵⁶⁷ | H | SO₃H | SO₃H | H | Methyl | F | CN | Methyl | 3-Methoxy phenyl |
| 1a⁵⁶⁸ | SO₃H | H | H | SO₃H | | | | | |
| 1a⁵⁶⁹ | H | SO₃H | SO₃H | H | Methyl | F | CN | Methyl | 4-Methoxy phenyl |
| 1a⁵⁷⁰ | SO₃H | H | H | SO₃H | | | | | |
| 1a⁵⁷¹ | H | SO₃H | SO₃H | H | Methyl | F | CN | Methyl | 2-Chlorophenyl |
| 1a⁵⁷² | SO₃H | H | H | SO₃H | | | | | |
| 1a⁵⁷³ | H | SO₃H | SO₃H | H | Methyl | F | CN | Methyl | 3-Chlorophenyl |
| 1a⁵⁷⁴ | SO₃H | H | H | SO₃H | | | | | |
| 1a⁵⁷⁵ | H | SO₃H | SO₃H | H | Methyl | F | CN | Methyl | 4-Chlorophenyl |
| 1a⁵⁷⁶ | SO₃H | H | H | SO₃H | | | | | |
| 1a⁵⁷⁷ | H | SO₃H | SO₃H | H | Methyl | F | CN | Methyl | 2-Fluorophenyl |
| 1a⁵⁷⁸ | SO₃H | H | H | SO₃H | | | | | |
| 1a⁵⁷⁹ | H | SO₃H | SO₃H | H | Methyl | F | CN | Methyl | 3-Fluorophenyl |
| 1a⁵⁸⁰ | SO₃H | H | H | SO₃H | | | | | |
| 1a⁵⁸¹ | H | SO₃H | SO₃H | H | Methyl | F | CN | Methyl | 4-Fluorophenyl |
| 1a⁵⁸² | SO₃H | H | H | SO₃H | | | | | |
| 1a⁵⁸³ | H | SO₃H | SO₃H | H | Methyl | F | CN | Methyl | 3-Phenyl sulfonamide |
| 1a⁵⁸⁴ | SO₃H | H | H | SO₃H | | | | | |
| 1a⁵⁸⁵ | H | SO₃H | SO₃H | H | Methyl | F | CN | Methyl | 2-Aminophenyl |
| 1a⁵⁸⁶ | SO₃H | H | H | SO₃H | | | | | |
| 1a⁵⁸⁷ | H | SO₃H | SO₃H | H | Methyl | F | CN | Methyl | 3-Aminophenyl |
| 1a⁵⁸⁸ | SO₃H | H | H | SO₃H | | | | | |
| 1a⁵⁸⁹ | H | SO₃H | SO₃H | H | Methyl | F | CN | Methyl | 4-Aminophenyl |
| 1a⁵⁹⁰ | SO₃H | H | H | SO₃H | | | | | |
| 1a⁵⁹¹ | H | SO₃H | SO₃H | H | NHCOCH₃ | OMe | CN | Methyl | Allyl |
| 1a⁵⁹² | SO₃H | H | H | SO₃H | | | | | |
| 1a⁵⁹³ | H | SO₃H | SO₃H | H | NHCOCH₃ | OMe | CN | Methyl | 2-Methoxy ethyl |
| 1a⁵⁹⁴ | SO₃H | H | H | SO₃H | | | | | |
| 1a⁵⁹⁵ | H | SO₃H | SO₃H | H | NHCOCH₃ | OMe | CN | Methyl | 3-Methoxy propyl |
| 1a⁵⁹⁶ | SO₃H | H | H | SO₃H | | | | | |
| 1a⁵⁹⁷ | H | SO₃H | SO₃H | H | NHCOCH₃ | OMe | CN | Methyl | 2-Cyanoethyl |
| 1a⁵⁹⁸ | SO₃H | H | H | SO₃H | | | | | |
| 1a⁵⁹⁹ | H | SO₃H | SO₃H | H | NHCOCH₃ | OMe | CN | Methyl | 2-(Methylthio) ethyl |
| 1a⁶⁰⁰ | SO₃H | H | H | SO₃H | | | | | |
| 1a⁶⁰¹ | H | SO₃H | SO₃H | H | NHCOCH₃ | OMe | CN | Methyl | 2-Hydroxyethyl |
| 1a⁶⁰² | SO₃H | H | H | SO₃H | | | | | |
| 1a⁶⁰³ | H | SO₃H | SO₃H | H | NHCOCH₃ | OMe | CN | Methyl | 2-Fluoroethyl |
| 1a⁶⁰⁴ | SO₃H | H | H | SO₃H | | | | | |
| 1a⁶⁰⁵ | H | SO₃H | SO₃H | H | NHCOCH₃ | OMe | CN | Methyl | 2-Chloroethyl |
| 1a⁶⁰⁶ | SO₃H | H | H | SO₃H | | | | | |
| 1a⁶⁰⁷ | H | SO₃H | SO₃H | H | NHCOCH₃ | OMe | CN | Methyl | 3-Chloropropyl |
| 1a⁶⁰⁸ | SO₃H | H | H | SO₃H | | | | | |
| 1a⁶⁰⁹ | H | SO₃H | SO₃H | H | NHCOCH₃ | OMe | CN | Methyl | Tetrahydro furfuryl |
| 1a⁶¹⁰ | SO₃H | H | H | SO₃H | | | | | |
| 1a⁶¹¹ | H | SO₃H | SO₃H | H | NHCOCH₃ | OMe | CN | Methyl | 2-Furan-2-yl-ethyl |
| 1a⁶¹² | SO₃H | H | H | SO₃H | | | | | |
| 1a⁶¹³ | H | SO₃H | SO₃H | H | NHCOCH₃ | OMe | CN | Methyl | 2-Ethylhexyl |
| 1a⁶¹⁴ | SO₃H | H | H | SO₃H | | | | | |
| 1a⁶¹⁵ | H | SO₃H | SO₃H | H | NHCOCH₃ | OMe | CN | Methyl | 6-Hydroxy-1-[2-(2-hydroxy-ethyl sulfanyl)-ethyl] |
| 1a⁶¹⁶ | SO₃H | H | H | SO₃H | | | | | |
| 1a⁶¹⁷ | H | SO₃H | SO₃H | H | NHCOCH₃ | OMe | CN | Methyl | 2-(2-tert-Butylsulfanyl-ethanesulfonyl )-ethyl |
| 1a⁶¹⁸ | SO₃H | H | H | SO₃H | | | | | |
| 1a⁶¹⁹ | H | SO₃H | SO₃H | H | NHCOCH₃ | OMe | CN | Methyl | 2-Hydroxy ethoxy propyl |
| 1a⁶²⁰ | SO₃H | H | H | SO₃H | | | | | |
| 1a⁶²¹ | H | SO₃H | SO₃H | H | NHCOCH₃ | OMe | CN | Methyl | 2-Hydroxy ethoxyethyl |
| 1a⁶²² | SO₃H | H | H | SO₃H | | | | | |
| 1a⁶²³ | H | SO₃H | SO₃H | H | NHCOCH₃ | OMe | CN | Methyl | 2-(Ethyl sulfonyl) ethanol |
| 1a⁶²⁴ | SO₃H | H | H | SO₃H | | | | | |
| 1a⁶²⁵ | H | SO₃H | SO₃H | H | NHCOCH₃ | OMe | CN | Methyl | 3-Isopropoxypro pyl |
| 1a⁶²⁶ | SO₃H | H | H | SO₃H | | | | | |
| 1a⁶²⁷ | H | SO₃H | SO₃H | H | NHCOCH₃ | OMe | CN | Methyl | 3-Ethoxypropyl |
| 1a⁶²⁸ | SO₃H | H | H | SO₃H | | | | | |
| 1a⁶²⁹ | H | SO₃H | SO₃H | H | NHCOCH₃ | OMe | CN | Methyl | 4-Ethoxybutyl |
| 1a⁶³⁰ | SO₃H | H | H | SO₃H | | | | | |
| 1a⁶³¹ | H | SO₃H | SO₃H | H | NHCOCH₃ | OMe | CN | Methyl | 3-Methyl phenyl |
| 1a⁶³² | SO₃H | H | H | SO₃H | | | | | |
| 1a⁶³³ | H | SO₃H | SO₃H | H | NHCOCH₃ | OMe | CN | Methyl | 2-Methyl phenyl |
| 1a⁶³⁴ | SO₃H | H | H | SO₃H | | | | | |
| 1a⁶³⁵ | H | SO₃H | SO₃H | H | NHCOCH₃ | OMe | CN | Methyl | 4-Methyl phenyl |
| 1a⁶³⁶ | SO₃H | H | H | SO₃H | | | | | |
| 1a⁶³⁷ | H | SO₃H | SO₃H | H | NHCOCH₃ | OMe | CN | Methyl | 2-Methoxy phenyl |
| 1a⁶³⁸ | SO₃H | H | H | SO₃H | | | | | |
| 1a⁶³⁹ | H | SO₃H | SO₃H | H | NHCOCH₃ | OMe | CN | Methyl | 3-Methoxy phenyl |
| 1a⁶⁴⁰ | SO₃H | H | H | SO₃H | | | | | |
| 1a⁶⁴¹ | H | SO₃H | SO₃H | H | NHCOCH₃ | OMe | CN | Methyl | 4-Methoxy phenyl |
| 1a⁶⁴² | SO₃H | H | H | SO₃H | | | | | |
| 1a⁶⁴³ | H | SO₃H | SO₃H | H | NHCOCH₃ | OMe | CN | Methyl | 2-Chlorophenyl |
| 1a⁶⁴⁴ | SO₃H | H | H | SO₃H | | | | | |
| 1a⁶⁴⁵ | H | SO₃H | SO₃H | H | NHCOCH₃ | OMe | CN | Methyl | 3-Chlorophenyl |
| 1a⁶⁴⁶ | SO₃H | H | H | SO₃H | | | | | |
| 1a⁶⁴⁷ | H | SO₃H | SO₃H | H | NHCOCH₃ | OMe | CN | Methyl | 4-Chlorophenyl |
| 1a⁶⁴⁸ | SO₃H | H | H | SO₃H | | | | | |
| 1a⁶⁴⁹ | H | SO₃H | SO₃H | H | NHCOCH₃ | OMe | CN | Methyl | 2-Fluorophenyl |
| 1a⁶⁵⁰ | SO₃H | H | H | SO₃H | | | | | |
| 1a⁶⁵¹ | H | SO₃H | SO₃H | H | NHCOCH₃ | OMe | CN | Methyl | 3-Fluorophenyl |
| 1a⁶⁵² | SO₃H | H | H | SO₃H | | | | | |
| 1a⁶⁵³ | H | SO₃H | SO₃H | H | NHCOCH₃ | OMe | CN | Methyl | 4-Fluorophenyl |
| 1a⁶⁵⁴ | SO₃H | H | H | SO₃H | | | | | |
| 1a⁶⁵⁵ | H | SO₃H | SO₃H | H | NHCOCH₃ | OMe | CN | Methyl | 3-Phenyl sulfonamide |
| 1a⁶⁵⁶ | SO₃H | H | H | SO₃H | | | | | |
| 1a⁶⁵⁷ | H | SO₃H | SO₃H | H | NHCOCH₃ | OMe | CN | Methyl | 2- |
| 1a⁶⁵⁸ | SO₃H | H | H | SO₃H | | | | | Aminophenyl |
| 1a⁶⁵⁹ | H | SO₃H | SO₃H | H | NHCOCH₃ | OMe | CN | Methyl | 3-Aminophenyl |
| 1a⁶⁶⁰ | SO₃H | H | H | SO₃H | | | | | |
| 1a⁶⁶¹ | H | SO₃H | SO₃H | H | NHCOCH₃ | OMe | CN | Methyl | 4-Aminophenyl |
| 1a⁶⁶² | SO₃H | H | H | SO₃H | | | | | |
| 1a⁶⁶³ | H | SO₃H | SO₃H | H | Methyl | Methyl | CONH₂ | Methyl | Allyl |
| 1a⁶⁶⁴ | SO₃H | H | H | SO₃H | | | | | |
| 1a⁶⁶⁵ | H | SO₃H | SO₃H | H | Methyl | Methyl | CONH₂ | Methyl | 2-Methoxy ethyl |
| 1a⁶⁶⁶ | SO₃H | H | H | SO₃H | | | | | |
| 1a⁶⁶⁷ | H | SO₃H | SO₃H | H | Methyl | Methyl | CONH₂ | Methyl | 3-Methoxy propyl |
| 1a⁶⁶⁸ | SO₃H | H | H | SO₃H | | | | | |
| 1a⁶⁶⁹ | H | SO₃H | SO₃H | H | Methyl | Methyl | CONH₂ | Methyl | 2-Cyanoethyl |
| 1a⁶⁷⁰ | SO₃H | H | H | SO₃H | | | | | |
| 1a⁶⁷¹ | H | SO₃H | SO₃H | H | Methyl | Methyl | CONH₂ | Methyl | 2-(Methylthio) ethyl |
| 1a⁶⁷² | SO₃H | H | H | SO₃H | | | | | |
| 1a⁶⁷³ | H | SO₃H | SO₃H | H | Methyl | Methyl | CONH₂ | Methyl | 2-Hydroxyethyl |
| 1a⁶⁷⁴ | SO₃H | H | H | SO₃H | | | | | |
| 1a⁶⁷⁵ | H | SO₃H | SO₃H | H | Methyl | Methyl | CONH₂ | Methyl | 2-Fluoroethyl |
| 1a⁶⁷⁶ | SO₃H | H | H | SO₃H | | | | | |
| 1a⁶⁷⁷ | H | SO₃H | SO₃H | H | Methyl | Methyl | CONH₂ | Methyl | 2-Chloroethyl |
| 1a⁶⁷⁸ | SO₃H | H | H | SO₃H | | | | | |
| 1a⁶⁷⁹ | H | SO₃H | SO₃H | H | Methyl | Methyl | CONH₂ | Methyl | 3-Chloropropyl |
| 1a⁶⁸⁰ | SO₃H | H | H | SO₃H | | | | | |
| 1a⁶⁸¹ | H | SO₃H | SO₃H | H | Methyl | Methyl | CONH₂ | Methyl | Tetrahydro furfuryl |
| 1a⁶⁸² | SO₃H | H | H | SO₃H | | | | | |
| 1a⁶⁸³ | H | SO₃H | SO₃H | H | Methyl | Methyl | CONH₂ | Methyl | 2-Furan-2-yl-ethyl |
| 1a⁶⁸⁴ | SO₃H | H | H | SO₃H | | | | | |
| 1a⁶⁸⁵ | H | SO₃H | SO₃H | H | Methyl | Methyl | CONH₂ | Methyl | 2-Ethylhexyl |
| 1a⁶⁸⁶ | SO₃H | H | H | SO₃H | | | | | |
| 1a⁶⁸⁷ | H | SO₃H | SO₃H | H | Methyl | Methyl | CONH₂ | Methyl | 6-Hydroxy-1-[2-(2-hydroxy-ethyl sulfanyl)-ethyl] |
| 1a⁶⁸⁸ | SO₃H | H | H | SO₃H | | | | | |
| 1a⁶⁸⁹ | H | SO₃H | SO₃H | H | Methyl | Methyl | CONH₂ | Methyl | 2-(2-tert-Butylsulfanyl-ethanesulfonyl )-ethyl |
| 1a⁶⁹⁰ | SO₃H | H | H | SO₃H | | | | | |
| 1a⁶⁹¹ | H | SO₃H | SO₃H | H | Methyl | Methyl | CONH₂ | Methyl | 2-Hydroxy ethoxy propyl |
| 1a⁶⁹² | SO₃H | H | H | SO₃H | | | | | |
| 1a⁶⁹³ | H | SO₃H | SO₃H | H | Methyl | Methyl | CONH₂ | Methyl | 2-Hydroxy ethoxyethyl |
| 1a⁶⁹⁴ | SO₃H | H | H | SO₃H | | | | | |
| 1a⁶⁹⁵ | H | SO₃H | SO₃H | H | Methyl | Methyl | CONH₂ | Methyl | 2-(Ethyl sulfonyl) ethanol |
| 1a⁶⁹⁶ | SO₃H | H | H | SO₃H | | | | | |
| 1a⁶⁹⁷ | H | SO₃H | SO₃H | H | Methyl | Methyl | CONH₂ | Methyl | 3-Isopropoxypro pyl |
| 1a⁶⁹⁸ | SO₃H | H | H | SO₃H | | | | | |
| 1a⁶⁹⁹ | H | SO₃H | SO₃H | H | Methyl | Methyl | CONH₂ | Methyl | 3-Ethoxypropyl |
| 1a⁷⁰⁰ | SO₃H | H | H | SO₃H | | | | | |
| 1a⁷⁰¹ | H | SO₃H | SO₃H | H | Methyl | Methyl | CONH₂ | Methyl | 3-Ethoxybutyl |
| 1a⁷⁰² | SO₃H | H | H | SO₃H | | | | | |
| 1a⁷⁰³ | H | SO₃H | SO₃H | H | Methyl | Methyl | CONH₂ | Methyl | 3-Methyl phenyl |
| 1a⁷⁰⁴ | SO₃H | H | H | SO₃H | | | | | |
| 1a⁷⁰⁵ | H | SO₃H | SO₃H | H | Methyl | Methyl | CONH₂ | Methyl | 2-Methyl phenyl |
| 1a⁷⁰⁶ | SO₃H | H | H | SO₃H | | | | | |
| 1a⁷⁰⁷ | H | SO₃H | SO₃H | H | Methyl | Methyl | CONH₂ | Methyl | 4-Methyl phenyl |
| 1a⁷⁰⁸ | SO₃H | H | H | SO₃H | | | | | |
| 1a⁷⁰⁹ | H | SO₃H | SO₃H | H | Methyl | Methyl | CONH₂ | Methyl | 2-Methoxy phenyl |
| 1a⁷¹⁰ | SO₃H | H | H | SO₃H | | | | | |
| 1a⁷¹¹ | H | SO₃H | SO₃H | H | Methyl | Methyl | CONH₂ | Methyl | 3-Methoxy phenyl |
| 1a⁷¹² | SO₃H | H | H | SO₃H | | | | | |
| 1a⁷¹³ | H | SO₃H | SO₃H | H | Methyl | Methyl | CONH₂ | Methyl | 4-Methoxy phenyl |
| 1a⁷¹⁴ | SO₃H | H | H | SO₃H | | | | | |
| 1a⁷¹⁵ | H | SO₃H | SO₃H | H | Methyl | Methyl | CONH₂ | Methyl | 2-Chlorophenyl |
| 1a⁷¹⁶ | SO₃H | H | H | SO₃H | | | | | |
| 1a⁷¹⁷ | H | SO₃H | SO₃H | H | Methyl | Methyl | CONH₂ | Methyl | 3-Chlorophenyl |
| 1a⁷¹⁸ | SO₃H | H | H | SO₃H | | | | | |
| 1a⁷¹⁹ | H | SO₃H | SO₃H | H | Methyl | Methyl | CONH₂ | Methyl | 4-Chlorophenyl |
| 1a⁷²⁰ | SO₃H | H | H | SO₃H | | | | | |
| 1a⁷²¹ | H | SO₃H | SO₃H | H | Methyl | Methyl | CONH₂ | Methyl | 2-Fluorophenyl |
| 1a⁷²² | SO₃H | H | H | SO₃H | | | | | |
| 1a⁷²³ | H | SO₃H | SO₃H | H | Methyl | Methyl | CONH₂ | Methyl | 3-Fluorophenyl |
| 1a⁷²⁴ | SO₃H | H | H | SO₃H | | | | | |
| 1a⁷²⁵ | H | SO₃H | SO₃H | H | Methyl | Methyl | CONH₂ | Methyl | 4-Fluorophenyl |
| 1a⁷²⁶ | SO₃H | H | H | SO₃H | | | | | |
| 1a⁷²⁷ | H | SO₃H | SO₃H | H | Methyl | Methyl | CONH₂ | Methyl | 3-Phenyl sulfonamide |
| 1a⁷²⁸ | SO₃H | H | H | SO₃H | | | | | |
| 1a⁷²⁹ | H | SO₃H | SO₃H | H | Methyl | Methyl | CONH₂ | Methyl | 2-Aminophenyl |
| 1a⁷³⁰ | SO₃H | H | H | SO₃H | | | | | |
| 1a⁷³¹ | H | SO₃H | SO₃H | H | Methyl | Methyl | CONH₂ | Methyl | 3-Aminophenyl |
| 1a⁷³² | SO₃H | H | H | SO₃H | | | | | |
| 1a⁷³³ | H | SO₃H | SO₃H | H | Methyl | Methyl | CONH₂ | Methyl | 4-Aminophenyl |
| 1a⁷³⁴ | SO₃H | H | H | SO₃H | | | | | |
| 1a⁷³⁵ | H | SO₃H | SO₃H | H | Methyl | F | CONH₂ | Methyl | Allyl |
| 1a⁷³⁶ | SO₃H | H | H | SO₃H | | | | | |
| 1a⁷³⁷ | H | SO₃H | SO₃H | H | Methyl | F | CONH₂ | Methyl | 2-Methoxy ethyl |
| 1a⁷³⁸ | SO₃H | H | H | SO₃H | | | | | |
| 1a⁷³⁹ | H | SO₃H | SO₃H | H | Methyl | F | CONH₂ | Methyl | 3-Methoxy propyl |
| 1a⁷⁴⁰ | SO₃H | H | H | SO₃H | | | | | |
| 1a⁷⁴¹ | H | SO₃H | SO₃H | H | Methyl | F | CONH₂ | Methyl | 2-Cyanoethyl |
| 1a⁷⁴² | SO₃H | H | H | SO₃H | | | | | |
| 1a⁷⁴³ | H | SO₃H | SO₃H | H | Methyl | F | CONH₂ | Methyl | 2-(Methylthio) ethyl |
| 1a⁷⁴⁴ | SO₃H | H | H | SO₃H | | | | | |
| 1a⁷⁴⁵ | H | SO₃H | SO₃H | H | Methyl | F | CONH₂ | Methyl | 2-Hydroxyethyl |
| 1a⁷⁴⁶ | SO₃H | H | H | SO₃H | | | | | |
| 1a⁷⁴⁷ | H | SO₃H | SO₃H | H | Methyl | F | CONH₂ | Methyl | 2-Fluoroethyl |
| 1a⁷⁴⁸ | SO₃H | H | H | SO₃H | | | | | |
| 1a⁷⁴⁹ | H | SO₃H | SO₃H | H | Methyl | F | CONH₂ | Methyl | 2-Chloroethyl |
| 1a⁷⁵⁰ | SO₃H | H | H | SO₃H | | | | | |
| 1a⁷⁵¹ | H | SO₃H | SO₃H | H | Methyl | F | CONH₂ | Methyl | 3-Chloropropyl |
| 1a⁷⁵² | SO₃H | H | H | SO₃H | | | | | |
| 1a⁷⁵³ | H | SO₃H | SO₃H | H | Methyl | F | CONH₂ | Methyl | Tetrahydro furfuryl |
| 1a⁷⁵⁴ | SO₃H | H | H | SO₃H | | | | | |
| 1a⁷⁵⁵ | H | SO₃H | SO₃H | H | Methyl | F | CONH₂ | Methyl | 2-Furan-2-yl-ethyl |
| 1a⁷⁵⁶ | SO₃H | H | H | SO₃H | | | | | |
| 1a⁷⁵⁷ | H | SO₃H | SO₃H | H | Methyl | F | CONH₂ | Methyl | 2-Ethylhexyl |
| 1a⁷⁵⁸ | SO₃H | H | H | SO₃H | | | | | |
| 1a⁷⁵⁹ | H | SO₃H | SO₃H | H | Methyl | F | CONH₂ | Methyl | 6-Hydroxy-1-[2-(2-hydroxy-ethyl sulfanyl)-ethyl] |
| 1a⁷⁶⁰ | SO₃H | H | H | SO₃H | | | | | |
| 1a⁷⁶¹ | H | SO₃H | SO₃H | H | Methyl | F | CONH₂ | Methyl | 2-(2-tert-Butylsulfanyl-ethanesulfonyl )-ethyl |
| 1a⁷⁶² | SO₃H | H | H | SO₃H | | | | | |
| 1a⁷⁶³ | H | SO₃H | SO₃H | H | Methyl | F | CONH₂ | Methyl | 2-Hydroxy ethoxy propyl |
| 1a⁷⁶⁴ | SO₃H | H | H | SO₃H | | | | | |
| 1a⁷⁶⁵ | H | SO₃H | SO₃H | H | Methyl | F | CONH₂ | Methyl | 2-Hydroxy ethoxyethyl |
| 1a⁷⁶⁶ | SO₃H | H | H | SO₃H | | | | | |
| 1a⁷⁶⁷ | H | SO₃H | SO₃H | H | Methyl | F | CONH₂ | Methyl | 2-(Ethyl sulfonyl) ethanol |
| 1a⁷⁶⁸ | SO₃H | H | H | SO₃H | | | | | |
| 1a⁷⁶⁹ | H | SO₃H | SO₃H | H | Methyl | F | CONH₂ | Methyl | 3-Isopropoxypro pyl |
| 1a⁷⁷⁰ | SO₃H | H | H | SO₃H | | | | | |
| 1a⁷⁷¹ | H | SO₃H | SO₃H | H | Methyl | F | CONH₂ | Methyl | 3-Ethoxypropyl |
| 1a⁷⁷² | SO₃H | H | H | SO₃H | | | | | |
| 1a⁷⁷³ | H | SO₃H | SO₃H | H | Methyl | F | CONH₂ | Methyl | 4-Ethoxybutyl |
| 1a⁷⁷⁴ | SO₃H | H | H | SO₃H | | | | | |
| 1a⁷⁷⁵ | H | SO₃H | SO₃H | H | Methyl | F | CONH₂ | Methyl | 3-Methyl phenyl |
| 1a⁷⁷⁶ | SO₃H | H | H | SO₃H | | | | | |
| 1a⁷⁷⁷ | H | SO₃H | SO₃H | H | Methyl | F | CONH₂ | Methyl | 2-Methyl phenyl |
| 1a⁷⁷⁸ | SO₃H | H | H | SO₃H | | | | | |
| 1a⁷⁷⁹ | H | SO₃H | SO₃H | H | Methyl | F | CONH₂ | Methyl | 4-Methyl phenyl |
| 1a⁷⁸⁰ | SO₃H | H | H | SO₃H | | | | | |
| 1a⁷⁸¹ | H | SO₃H | SO₃H | H | Methyl | F | CONH₂ | Methyl | 2-Methoxy phenyl |
| 1a⁷⁸² | SO₃H | H | H | SO₃H | | | | | |
| 1a⁷⁸³ | H | SO₃H | SO₃H | H | Methyl | F | CONH₂ | Methyl | 3-Methoxy phenyl |
| 1a⁷⁸⁴ | SO₃H | H | H | SO₃H | | | | | |
| 1a⁷⁸⁵ | H | SO₃H | SO₃H | H | Methyl | F | CONH₂ | Methyl | 4-Methoxy phenyl |
| 1a⁷⁸⁶ | SO₃H | H | H | SO₃H | | | | | |
| 1a⁷⁸⁷ | H | SO₃H | SO₃H | H | Methyl | F | CONH₂ | Methyl | 2-Chlorophenyl |
| 1a⁷⁸⁸ | SO₃H | H | H | SO₃H | | | | | |
| 1a⁷⁸⁹ | H | SO₃H | SO₃H | H | Methyl | F | CONH₂ | Methyl | 3-Chlorophenyl |
| 1a⁷⁹⁰ | SO₃H | H | H | SO₃H | | | | | |
| 1a⁷⁹¹ | H | SO₃H | SO₃H | H | Methyl | F | CONH₂ | Methyl | 4-Chlorophenyl |
| 1a⁷⁹² | SO₃H | H | H | SO₃H | | | | | |
| 1a⁷⁹³ | H | SO₃H | SO₃H | H | Methyl | F | CONH₂ | Methyl | 2-Fluorophenyl |
| 1a⁷⁹⁴ | SO₃H | H | H | SO₃H | | | | | |
| 1a⁷⁹⁵ | H | SO₃H | SO₃H | H | Methyl | F | CONH₂ | Methyl | 3-Fluorophenyl |
| 1a⁷⁹⁶ | SO₃H | H | H | SO₃H | | | | | |
| 1a⁷⁹⁷ | H | SO₃H | SO₃H | H | Methyl | F | CONH₂ | Methyl | 4-Fluorophenyl |
| 1a⁷⁹⁸ | SO₃H | H | H | SO₃H | | | | | |
| 1a⁷⁹⁹ | H | SO₃H | SO₃H | H | Methyl | F | CONH₂ | Methyl | 3-Phenyl sulfonamide |
| 1a⁸⁰⁰ | SO₃H | H | H | SO₃H | | | | | |
| 1a⁸⁰¹ | H | SO₃H | SO₃H | H | Methyl | F | CONH₂ | Methyl | 2-Aminophenyl |
| 1a⁸⁰² | SO₃H | H | H | SO₃H | | | | | |
| 1a⁸⁰³ | H | SO₃H | SO₃H | H | Methyl | F | CONH₂ | Methyl | 3-Aminophenyl |
| 1a⁸⁰⁴ | SO₃H | H | H | SO₃H | | | | | |
| 1a⁸⁰⁵ | H | SO₃H | SO₃H | H | Methyl | F | CONH₂ | Methyl | 4-Aminophenyl |
| 1a⁸⁰⁶ | SO₃H | H | H | SO₃H | | | | | |
| 1a⁸⁰⁷ | H | SO₃H | SO₃H | H | NHCOCH₃ | OMe | CONH₂ | Methyl | Allyl |
| 1a⁸⁰⁸ | SO₃H | H | H | SO₃H | | | | | |
| 1a⁸⁰⁹ | H | SO₃H | SO₃H | H | NHCOCH₃ | OMe | CONH₂ | Methyl | 2-Methoxy ethyl |
| 1a⁸¹⁰ | SO₃H | H | H | SO₃H | | | | | |
| 1a⁸¹¹ | H | SO₃H | SO₃H | H | NHCOCH₃ | OMe | CONH₂ | Methyl | 3-Methoxy propyl |
| 1a⁸¹² | SO₃H | H | H | SO₃H | | | | | |
| 1a⁸¹³ | H | SO₃H | SO₃H | H | NHCOCH₃ | OMe | CONH₂ | Methyl | 2-Cyanoethyl |
| 1a⁸¹⁴ | SO₃H | H | H | SO₃H | | | | | |
| 1a⁸¹⁵ | H | SO₃H | SO₃H | H | NHCOCH₃ | OMe | CONH₂ | Methyl | 2-(Methylthio) ethyl |
| 1a⁸¹⁶ | SO₃H | H | H | SO₃H | | | | | |
| 1a⁸¹⁷ | H | SO₃H | SO₃H | H | NHCOCH₃ | OMe | CONH₂ | Methyl | 2-Hydroxyethyl |
| 1a⁸¹⁸ | SO₃H | H | H | SO₃H | | | | | |
| 1a⁸¹⁹ | H | SO₃H | SO₃H | H | NHCOCH₃ | OMe | CONH₂ | Methyl | 2-Fluoroethyl |
| 1a⁸²⁰ | SO₃H | H | H | SO₃H | | | | | |
| 1a⁸²¹ | H | SO₃H | SO₃H | H | NHCOCH₃ | OMe | CONH₂ | Methyl | 2-Chloroethyl |
| 1a⁸²² | SO₃H | H | H | SO₃H | | | | | |
| 1a⁸²³ | H | SO₃H | SO₃H | H | NHCOCH₃ | OMe | CONH₂ | Methyl | 3-Chloropropyl |
| 1a⁸²⁴ | SO₃H | H | H | SO₃H | | | | | |
| 1a⁸²⁵ | H | SO₃H | SO₃H | H | NHCOCH₃ | OMe | CONH₂ | Methyl | Tetrahydro furfuryl |
| 1a⁸²⁶ | SO₃H | H | H | SO₃H | | | | | |
| 1a⁸²⁷ | H | SO₃H | SO₃H | H | NHCOCH₃ | OMe | CONH₂ | Methyl | 2-Furan-2-yl-ethyl |
| 1a⁸²⁸ | SO₃H | H | H | SO₃H | | | | | |
| 1a⁸²⁹ | H | SO₃H | SO₃H | H | NHCOCH₃ | OMe | CONH₂ | Methyl | 2-Ethylhexyl |
| 1a⁸³⁰ | SO₃H | H | H | SO₃H | | | | | |
| 1a⁸³¹ | H | SO₃H | SO₃H | H | NHCOCH₃ | OMe | CONH₂ | Methyl | 6-Hydroxy-1-[2-(2-hydroxy-ethyl sulfanyl)-ethyl] |
| 1a⁸³² | SO₃H | H | H | SO₃H | | | | | |
| 1a⁸³³ | H | SO₃H | SO₃H | H | NHCOCH₃ | OMe | CONH₂ | Methyl | 2-(2-tert-Butylsulfanyl-ethanesulfonyl )-ethyl |
| 1a⁸³⁴ | SO₃H | H | H | SO₃H | | | | | |
| 1a⁸³⁵ | H | SO₃H | SO₃H | H | NHCOCH₃ | OMe | CONH₂ | Methyl | 2-Hydroxy ethoxy propyl |
| 1a⁸³⁶ | SO₃H | H | H | SO₃H | | | | | |
| 1a⁸³⁷ | H | SO₃H | SO₃H | H | NHCOCH₃ | OMe | CONH₂ | Methyl | 2-Hydroxy ethoxyethyl |
| 1a⁸³⁸ | SO₃H | H | H | SO₃H | | | | | |
| 1a⁸³⁹ | H | SO₃H | SO₃H | H | NHCOCH₃ | OMe | CONH₂ | Methyl | 2-(Ethyl sulfonyl) ethanol |
| 1a⁸⁴⁰ | SO₃H | H | H | SO₃H | | | | | |
| 1a⁸⁴¹ | H | SO₃H | SO₃H | H | NHCOCH₃ | OMe | CONH₂ | Methyl | 3-Isopropoxypro pyl |
| 1a⁸⁴² | SO₃H | H | H | SO₃H | | | | | |
| 1a⁸⁴³ | H | SO₃H | SO₃H | H | NHCOCH₃ | OMe | CONH₂ | Methyl | 3-Ethoxypropyl |
| 1a⁸⁴⁴ | SO₃H | H | H | SO₃H | | | | | |
| 1a⁸⁴⁵ | H | SO₃H | SO₃H | H | NHCOCH₃ | OMe | CONH₂ | Methyl | 3-Ethoxybutyl |
| 1a⁸⁴⁶ | SO₃H | H | H | SO₃H | | | | | |
| 1a⁸⁴⁷ | H | SO₃H | SO₃H | H | NHCOCH₃ | OMe | CONH₂ | Methyl | 3-Methyl phenyl |
| 1a⁸⁴⁸ | SO₃H | H | H | SO₃H | | | | | |
| 1a⁸⁴⁹ | H | SO₃H | SO₃H | H | NHCOCH₃ | OMe | CONH₂ | Methyl | 2-Methyl phenyl |
| 1a⁸⁵⁰ | SO₃H | H | H | SO₃H | | | | | |
| 1a⁸⁵¹ | H | SO₃H | SO₃H | H | NHCOCH₃ | OMe | CONH₂ | Methyl | 4-Methyl phenyl |
| 1a⁸⁵² | SO₃H | H | H | SO₃H | | | | | |
| 1a⁸⁵³ | H | SO₃H | SO₃H | H | NHCOCH₃ | OMe | CONH₂ | Methyl | 2-Methoxy phenyl |
| 1a⁸⁵⁴ | SO₃H | H | H | SO₃H | | | | | |
| 1a⁸⁵⁵ | H | SO₃H | SO₃H | H | NHCOCH₃ | OMe | CONH₂ | Methyl | 3-Methoxy phenyl |
| 1a⁸⁵⁶ | SO₃H | H | H | SO₃H | | | | | |
| 1a⁸⁵⁷ | H | SO₃H | SO₃H | H | NHCOCH₃ | OMe | CONH₂ | Methyl | 4-Methoxy phenyl |
| 1a⁸⁵⁸ | SO₃H | H | H | SO₃H | | | | | |
| 1a⁸⁵⁹ | H | SO₃H | SO₃H | H | NHCOCH₃ | OMe | CONH₂ | Methyl | 2-Chlorophenyl |
| 1a⁸⁶⁰ | SO₃H | H | H | SO₃H | | | | | |
| 1a⁸⁶¹ | H | SO₃H | SO₃H | H | NHCOCH₃ | OMe | CONH₂ | Methyl | 3-Chlorophenyl |
| 1a⁸⁶² | SO₃H | H | H | SO₃H | | | | | |
| 1a⁸⁶³ | H | SO₃H | SO₃H | H | NHCOCH₃ | OMe | CONH₂ | Methyl | 4-Chlorophenyl |
| 1a⁸⁶⁴ | SO₃H | H | H | SO₃H | | | | | |
| 1a⁸⁶⁵ | H | SO₃H | SO₃H | H | NHCOCH₃ | OMe | CONH₂ | Methyl | 2-Fluorophenyl |
| 1a⁸⁶⁶ | SO₃H | H | H | SO₃H | | | | | |
| 1a⁸⁶⁷ | H | SO₃H | SO₃H | H | NHCOCH₃ | OMe | CONH₂ | Methyl | 3-Fluorophenyl |
| 1a⁸⁶⁸ | SO₃H | H | H | SO₃H | | | | | |
| 1a⁸⁶⁹ | H | SO₃H | SO₃H | H | NHCOCH₃ | OMe | CONH₂ | Methyl | 4-Fluorophenyl |
| 1a⁸⁷⁰ | SO₃H | H | H | SO₃H | | | | | |
| 1a⁸⁷¹ | H | SO₃H | SO₃H | H | NHCOCH₃ | OMe | CONH₂ | Methyl | 3-Phenyl sulfonamide |
| 1a⁸⁷² | SO₃H | H | H | SO₃H | | | | | |
| 1a⁸⁷³ | H | SO₃H | SO₃H | H | NHCOCH₃ | OMe | CONH₂ | Methyl | 2-Aminophenyl |
| 1a⁸⁷⁴ | SO₃H | H | H | SO₃H | | | | | |
| 1a⁸⁷⁵ | H | SO₃H | SO₃H | H | NHCOCH₃ | OMe | CONH₂ | Methyl | 3-Aminophenyl |
| 1a⁸⁷⁶ | SO₃H | H | H | SO₃H | | | | | |
| 1a⁸⁷⁷ | H | SO₃H | SO₃H | H | NHCOCH₃ | OMe | CONH₂ | Methyl | 4-Aminophenyl |
| 1a⁸⁷⁸ | SO₃H | H | H | SO₃H | | | | | |

The present invention also provides a process for the production of dyes of formula (1) comprising the steps
a) diazotization of a compound of formula (2) 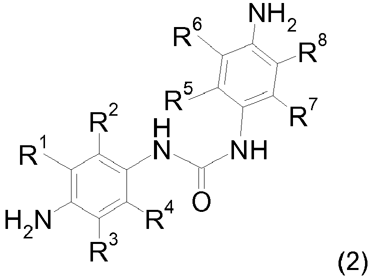 wherein R¹ to R⁸ are defined as given above,
b) reacting diazonium salt obtained in step a) with the compounds of formula (3) and (4) 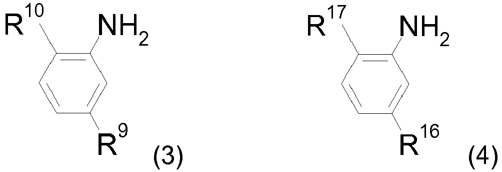 wherein R⁹, R¹⁰ and R¹⁶, R¹⁷ are defined as given above, to yield an intermediate of formula (5) 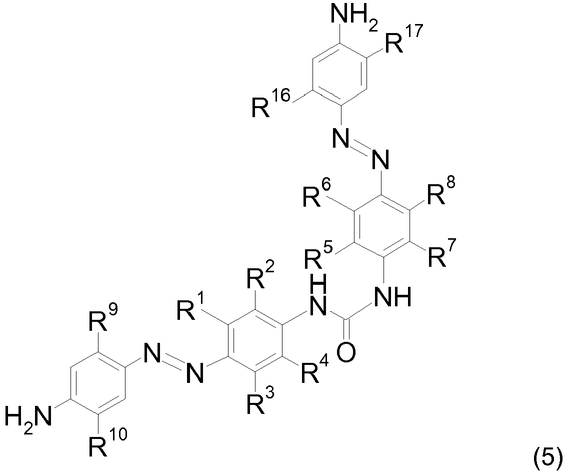
c) diazotization of the compound of formula (5),
d) reacting the diazonium salt obtained in step c) with the compounds of formula (6) and (7), and mixtures thereof 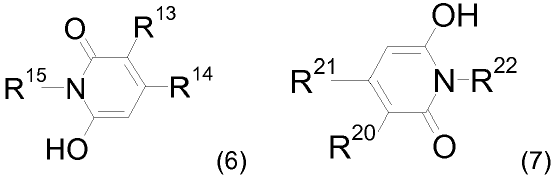
wherein R¹³ to R²² are defined as given above.

The diazotization of the compounds of formulae (2) and (5) can be performed by means of diazotization methods that are known to a person skilled in the art, preferably by using sodium nitrite or nitrosylsulfuric acid in acidic medium using inorganic acids such as hydrochloric acid, sulfuric acid or phosphoric acid or mixtures thereof or organic acids such as acetic acid or propionic acid or mixtures thereof. Also mixtures of inorganic acid with organic acids can be advantageously used.

The coupling reaction of the diazonium salt obtained by diazotization of the compound of formula (2) onto the compounds of formulae (3) and (4) as well as the coupling reaction of the diazonium salt obtained by diazotization of the compound of formula (5) onto the compounds of formulae (6) and (7) can likewise be performed by known methods.

The compounds of the formula (2) are known and commercially available or can be synthesised by means of common chemical reactions known to a person skilled in the art such as the methods disclosed in DE 140613 C.

The pyridones of formula (6) and (7) in which R¹³ and R²⁰ represent cyano are commercially available or can be synthesized via methods disclosed in the literature such as US 2004/006234 A1. Through analogy, all the pyridone nitriles used in this invention can be synthesized using the protocol. The obtained pyridone nitriles can be further derivatized by reactions known to persons skilled in the art, such as hydrolysis to form pyridones of formula (6) and (7) in which R¹³ and R²⁰ represent carbonamide or by hydrolysis and further esterification to form pyridones of formula (6) and (7) in which R¹³ and R²⁰ represent alkoxycarbonyl.

The above-mentioned derivatization reactions can be carried out in alkaline or acidic media, preferably in acidic media using strong inorganic acids such as sulfuric acid or hydrochloric acid gaseous or solution, acidic resins or chlorotrimethylsilane or other suitable acid catalyst in the presence of the corresponding alkohol. The reactions are advantageously carried out under inert atmosphere at temperatures in the range from 40 °C to 150 °C.

Alternatively, the above mentioned derivatization reactions can be undertaken as a final step after the synthesis of the corresponding dyes with pyridone nitriles.

The dyes of the present invention can be used alone or as a mixture with other dyes according to the present invention and/or other substances.

Thus a chemical composition comprising one or more dye(s) as described above is also an aspect of the present invention.

A chemical composition consisting of two or more dyes as described above forms another preferred aspect of the present invention.

Also an aqueous solution for dying comprising one or more dye(s) as described above forms an aspect of the present invention.

The dyes of the present invention are suitable for dyeing and printing of natural, manufactured regenerated, modified or synthetic hydroxyl- amino-, and/or carboxamido-containing fiber materials and their blends by the application methods numerously described in the art for acid dyes.

Therefore, the present invention also is directed to a Process for dyeing or printing carboxamido- and/or hydroxyl-containing material, comprising contacting the carboxamido- and/or hydroxyl-containing material with a dye as described above.

The use of a dye as described above, a chemical composition as described above or of an aqueous solution as described above for dying fibers, as well as blends of such fibres selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers forms another aspect of the present invention.

Still another aspect of the present invention is/are: Fiber and blends containing such fiber selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers, and Lyocell fibers comprising one or more dye(s) of the present invention either in chemically and/or physically bound form.

The above-mentioned substrates to be dyed can be present in various forms such as but not limited to yarn, woven fabric, loop-formingly knitted fabric or carpet. For instance in the form of sheetlike structures, such as paper and leather, in the form of films, such as nylon films, or in the form of a bulk mass, for example composed of polyamide and polyurethane, in particular in the form of fibers, for example cellulose fibers. The fibers are preferably textile fibers, for example in the form of woven fabrics or yarns or in the form of hanks or wound packages.

The dyes of the present invention and their salts and/or mixtures can be used as a single dyeing colorant in dyeing or printing processes or can be part of a di-, tri- or multi-component combination colorant in dyeing or in printing compositions. The di-, tri- or multi-component shade dyeings show similar fastness level as compared to dyeing performed with a single colorant component.

Dyes of the present invention and their salts or mixtures are highly compatible with other known and/or commercially available acid dyes and they can be used together with such dyes of related chromophores and similar technical performance to obtain specific hues. Similar technical performance includes: comparable build-up, comparable fastness properties and comparable exhaustion rates during dyeings.

The dyes according to the invention can be applied to the materials mentioned, especially the fiber materials mentioned, by the application techniques known for water-soluble dyes. This applies to both, dyeing and printing processes.

It applies in particular to the production of dyeings on fiber materials composed of wool or other natural polyamides or of synthetic polyamides and their mixtures with other fiber material. In general, the material to be dyed is introduced into the bath at a temperature of about 40 °C, agitated therein for some time, the dyebath is then adjusted to the desired weakly acidic, preferably weakly acetic acid, pH and the actual dyeing is carried out at a temperature between 60 and 98 °C. However, the dyeings can also be carried out at the boil or in a sealed dyeing apparatus at temperatures of up to 106 °C.

Since the water solubility of the dyes according to the invention is very good, they can also be used with advantage in customary continuous dyeing processes.

The dyes of the present invention can also be used in digital printing processes, in particular in digital textile printing. For this the dyes of the present invention need to be formulated in aqueous inks.

An Ink for digital textile printing, comprising a dye of the present invention is another aspect of the present invention.

The inks of the present invention comprise the dye of the present invention in amounts which preferably range from 0.1 to 50 % by weight, more preferably from 0.5 to 30 % by weight and most preferably from 1 to 15 % by weight, based on the total weight of the ink.

If desired the inks may contain further dyes used in digital printing in addition to the one or more dyes of the present invention.

For the inks of the present invention to be used in the continuous flow process, a conductivity of 0.5 to 25 mS/m can be set by adding an electrolyte. Useful electrolytes include for example lithium nitrate and potassium nitrate. The inks of the present invention may include organic solvents at a total level of 1 to 50 % by weight and preferably 5 to 30 % by weight. Suitable organic solvents are for example alcohols, for example methanol, ethanol, 1-propanol, isopropanol, 1-butanol, tert-butanol, pentyl alcohol, polyhydric alcohols for example: 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, hexanediol, D,L-1,2-hexanediol, 1,6-hexanediol, 1,2,6-hexanetriol, 1,2-octanediol, polyalkylene glycols, for example: polyethylene glycol, polypropylene glycol, alkylene glycols having 1 to 8 alkylene groups, for example: monoethylene glycol, diethylene glycol, triethylene glycol, tetraethylene glycol, thioglycol, thiodiglycol, butyltriglycol, hexylene glycol, propylene glycol, dipropylene glycol, tripropylene glycol, low alkyl ethers of polyhydric alcohols, for example: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether, tripropylene glycol isopropyl ether, polyalkylene glycol ethers, such as for example: polyethylene glycol monomethyl ether, polypropylene glycol glycerol ether, polyethylene glycol tridecyl ether, polyethylene glycol nonylphenyl ether, amines, such as for example: methylamine, ethylamine, triethylamine, diethylamine, dimethylamine, trimethylamine, dibutylamine, diethanolamine, triethanolamine, N-acetylethanolamine, N-formylethanolamine, ethylenediamine, urea derivatives, such as for example: urea, thiourea, N-methylurea, N,N'-epsilon dimethylurea, ethyleneurea, 1,1,3,3-tetramethylurea, amides, such as for example: dimethylformamide, dimethylacetamide, acetamide, ketones or keto alcohols, such as for example: acetone, diacetone alcohol, cyclic ethers, such as for example:
tetrahydrofuran, trimethylolethane, trimethylolpropane, 2-butoxyethanol, benzyl alcohol, 2-butoxyethanol, gamma butyrolactone, epsilon-caprolactam, further sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyrrolidone, 1-(3-hydroxypropyl)-2-pyrrolidone, 1,3-dimethyl-2-imidazolidinone, 1,3-dimethyl-2-imidazolinone, 1,3-bismethoxymethylimidazolidine, 2-(2-methoxyethoxy)-ethanol, 2-(2-ethoxyethoxy)ethanol, 2-(2-butoxyethoxy)ethanol, 2-(2-propoxyethoxy)-ethanol, pyridine, piperidine, butyrolactone, trimethylpropane, 1,2-dimethoxypropane, dioxane ethyl acetate, ethylenediaminetetraacetate ethyl pentyl ether, 1,2-dimethoxypropane and trimethylpropane.

The inks of the present invention may further include customary additives, for example viscosity moderators to set viscosities in the range from 1.5 to 40.0 mPas in a temperature range from 20 to 50 °C. Preferred inks have a viscosity of 1.5 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane, nonionic cellulose ethers.

As further additives the inks of the invention may include surface-active substances to set surface tensions of 20 to 65 mN/m, which are adapted if necessary as a function of the process used (thermal or piezo technology). Useful surface-active substances include for example: all surfactants, preferably nonionic surfactants, butyldiglycol, 1,2-hexanediol.

The inks of the present invention may further comprise customary additives, for example substances to inhibit fungal and bacterial growth in amounts from 0.01 to 1 % by weight based on the total weight of the ink.

The inks may be prepared in a conventional manner by mixing the components in water.

The inks of the invention are particularly useful in inkjet printing processes for printing a wide variety of pretreated materials, such as silk, leather, wool, polyamide fibers and polyurethanes, and cellulosic fiber materials of any kind. Blend fabrics, for example blends of cotton, silk, wool with polyester fibers or polyamide fibers can similarly be printed.

In contrast to conventional textile printing, where the printing ink already contains all necessary chemicals, in digital or inkjet printing the auxiliaries have to be applied to the textile substrate in a separate pretreatment step.

The pretreatment of the textile substrate, for example cellulose and regenerated cellulose fibers and also silk and wool, is effected with an aqueous alkaline liquor prior to printing. In addition there is a need for thickeners to prevent flowing of the motives when the printing ink is applied, for example sodium alginates, modified polyacrylates or highly etherified galactomannans.

These pretreatment reagents are uniformly applied to the textile substrate in a defined amount using suitable applicators, for example using a 2- or 3-roll pad, contactless spraying technologies, by means of foam application or using appropriately adapted inkjet technologies, and subsequently dried.

The examples below serve to illustrate the invention. Parts and percentages are by weigh unless noted otherwise. The relationship between parts by weight and parts by volume is that of the kilogram to the liter.

### Example 1

10.06 g of 5,5'-diamino-2,2'-ureylene-bis-benzenesulfonic acid were first dissolved in water at slightly acidic pH to give a complete solution. Ice was added to the solution and when the temperature reached 10 to 15 °C, 10.6 ml of 5N of sodium nitrite solution were added dropwise. The reaction mixture was further cooled down to 0 to 8 °C when the mixture was added dropwise into 12.38 g of concentrated HCl with 12 g of ice. A yellow suspension formed and the reaction mixture was completed within an hour.

6.30 g of 2,5-Dimethyl-phenylamine were added directly into the diazo suspension and stirred. A violet precipitate was observed upon addition. The intermediate precipitate obtained, 4,4'-Bis-(4-amino-2,5-dimethyl-phenylazo)-biphenyl-2,2'-disulfo-nic acid, was filtered off with suction and washed with organic solvent and dried.

15.22 g of the dried intermediate, 5,5'-Bis-(4-amino-2,5-dimethyl-phenylazo)-2,2'-ureylene-bis-benzenesulfonic acid, were then dissolved in water at slightly acidic pH to give a complete reddish orange solution. Ice was added to the solution and when the temperature reached 10 to 15 °C, 10.1 ml of 5N sodium nitrite solution were added dropwise. The reaction mixture was further cooled down to 0 to 8 °C when the mixture was added dropwise into concentrated HCl with ice. A violet suspension formed and reaction mixture was completed in 90 mins.
The reaction mixture was used in the next step as described below.
10.93 g of 1-Ethyl-6-hydroxy-4-methyl-2-oxo-1,2-dihydro-pyridine-3-carbonitrile were stirred in methanol and adjusted to slightly acidic. The reaction mixture was added dropwise into the methanol solution and stir. Brilliant orange precipitate was observed upon addition. The precipitate obtained was filtered off with suction and washed with brine giving product of formula 1a³. The analytic data are consistent with the assigned structure for product 1a³. The product 1a³ dyes the targeted fibre materials in brilliant orange to red shades.

Through analogy, all the dyes of formulae (1a¹-1a⁸⁷⁸) can be synthesized according to the method described above.

### Dyeing example 1

1 part of the dye 1a³ of this invention was dissolved in 2000 parts of water and 1 part of levelling assistant (based on condensation product of a higher aliphatic amine and ethylene oxide) and 6 parts of sodium acetate were added. The pH was then adjusted to 5 using acetic acid (80%). The dyebath was heated to 50 °C for 10 minutes and then entered with 100 parts of a woven polyamide-6 fabric. The temperature was raised to 98 °C over the course of 50 minutes and then dyeing is carried out at this temperature for 60 minutes. This was followed by cooling to 60 °C and removal of the dyed material. The polyamide-6 fabric was washed with hot and cold water, soaped and then spun and dried. The orange dyeings obtained have very good light and wet fastness and also good levelness in the fibre.

### Dyeing example 2

1 part of the dye 1a³ of this invention was dissolved in 2000 parts of water and 1 part of levelling assistant (based on condensation product of a higher aliphatic amine and ethylene oxide) and 6 parts of sodium acetate were added. The pH was then adjusted to 5.5 using acetic acid (80 %). The dyebath was heated to 50 °C for 10 minutes and then entered with 100 parts of a woven polyamide-6,6 fabric. The temperature was raised to 120 °C over the course of 50 minutes and then dyeing was carried out at this temperature for 60 minutes. This was followed by cooling to 60 °C and removal of the dyed material. The polyamide-6,6 fabric was washed with hot and cold water, soaped and then spun and dried. The orange dyeings obtained have very good light and wet fastness and also good levelness in the fibre.

### Dyeing example 3

100 parts of polyamide-6 material were padded with a 1000 parts 50 °C liquor solution that consisted of 40 parts of the dye 1a³, 100 parts of urea, 20 parts of a non ionic solubilizer based on butyldiglycol, 20 parts of acetic acid to adjust the pH to 4.0, 10 parts of levelling assistant (based on ethoxylated aminopropyl fatty acid amide) and 810 parts of water. The material was rolled up and placed into a steaming chamber at 85 to 98 °C for 3 to 6 hours. After fixation, the fabric was washed with hot and cold water, soaped and then spun and dried. The orange dyeings obtained have very good light and wet fastness and also good levelness in the fibre.

### Dyeing example 4

1 part of the dye 1a³ of this invention was dissolved in 2000 parts of water and 5 parts of sodium sulphate, and 1 part of levelling assistant (based on condensation product of a higher aliphatic amine and ethylene oxide) and 5 parts of sodium acetate were added. The pH was then adjusted to 4.5 using acetic acid (80 %). The dyebath was heated to 50 °C for 10 minutes and then entered with 100 parts of a woven wool fabric. The temperature was raised to 100 °C over the course of 50 minutes and then dyeing was carried out at this temperature for 60 minutes. This was followed by cooling to 90 °C and removal of the dyed material. The wool fabric was washed with hot and cold water, soaped and then spun and dried. The orange dyeings obtained have very good light and wet fastness and also good levelness in the fibre.

### Dyeing example 5

1 part of the dye 1a³ of this invention was dissolved in 1000 parts of soft water and 7.5 parts of sodium sulphate, and 1 parts of a wetting agent (anionic) was added. 100 parts of bleached cotton knitted fabric were added to this solution. The dye bath was then heated up to 98 °C with a gradient of 2 °C/min, then dyeing was carried out at this temperature for 60 minutes. This was followed by cooling down to 80 °C. At 80 °C the dyeing was continued for another 20 minutes. The dyed material was then removed and was washed with hot and cold water, soaped and then spun and dried. The orange dyeings obtained have very good light and wet fastness and also good levelness in the fibre.

### Dyeing example 6

3 parts of the dye 1a³ of this invention dissolved in 82 parts of deionized water were added into the dyebath with 15 parts of diethylene glycol at 60 °C. On cooling, an orange printing ink was obtained. The orange printing ink can be used for ink jet printing on paper, polyamide or wool textiles.

### Dyeing example 7

4 parts of chemically bleached (pine wood) sulphite pulp is mixed up with 100 parts of 55 °C water. 1 part of the dye 1a³ of this invention was dissolved in 100 parts of hot water. 80 parts of this solution were given to the mixed-up pulp and mixed for 2 minutes. After that the mixture was sized with resin size in a conventional manner and mixed for another 2 minutes. 55 parts of this solution were then diluted with 2000 parts of cold water and the paper was produced out of this solution. The orange paper produced from the mixture has good wet fastnesses.

## Claims

1. Dyes of formula (1) 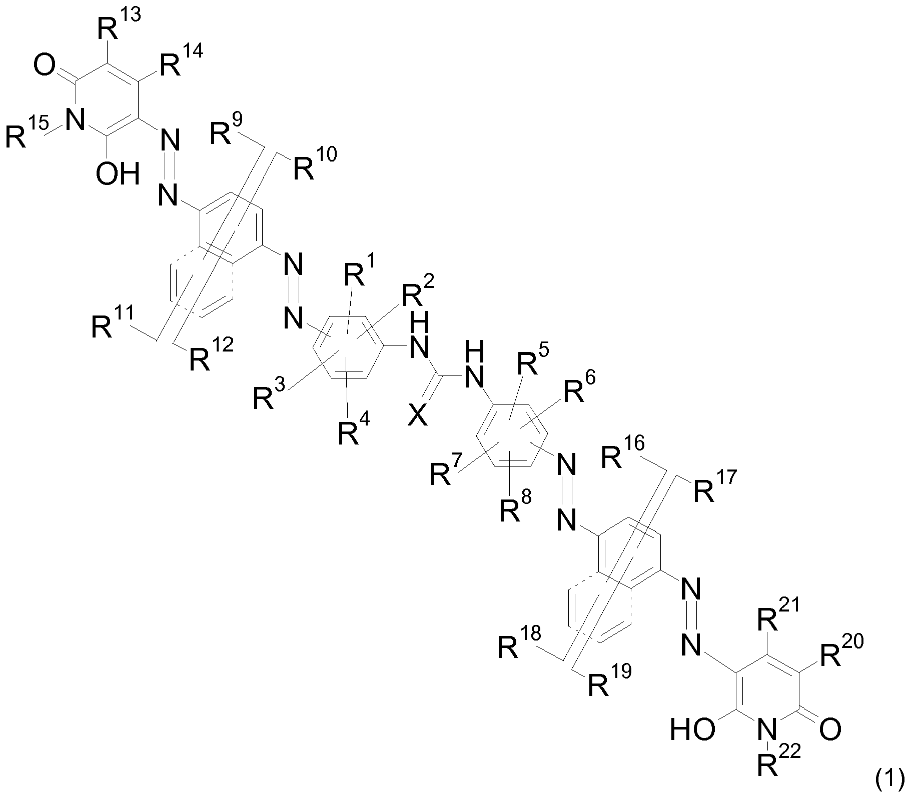 wherein
X is oxygen, sulphur or nitrogen,
R¹, R², R³, R⁴, R⁵, R⁶, R⁷ and R⁸ independent of each other is hydrogen, alkyl, alkoxy, halogen, trifluoromethyl or SO₃M, whereby at least two of them are SO₃M,
R⁹, R¹⁰, R¹¹, R¹², R¹⁶, R¹⁷, R¹⁸, R¹⁹ independent of each other is hydrogen, alkyl, substituted alkyl, alkyl chain interrupted by one or two heteroatoms selected from the group consisting of oxygen and sulphur, alkoxy, substituted alkoxy, halogen, trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, -S₃M or alkylureido,
R¹³ and R²⁰ independent of each other is cyano, carbamoyl, alkoxycarbonyl, trifluoromethyl, carbonyltrifluoromethyl, alkylsulfonyl, halogen, alkyl sulfonic acid or SO₃M,
R¹⁴ and R²¹ independent of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio
or
is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R¹⁵ and R²² independent of each other is hydrogen, alkyl, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N,N-dicycloalkylamino, N-alkyl-N-cycloalkyl-amino, N-aryl-N-cycloalkyl-amino, N-heteroarylamino, N-heterocycloalkylamino, hydroxyakylsulfonylalkyl
or
alkyl interrupted by one or more heteroatoms selected from the group consisting of oxygen and sulphur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms selected from the group consisting of oxygen and sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
M is hydrogen, an alkali metal, ammonium, one equivalent of an alkali earth metal or a monovalent organic cation
and
the dyes of formula (1) have two to six sulfonic acid groups.

2. Dyes according to claim 1, having formula (1 a) 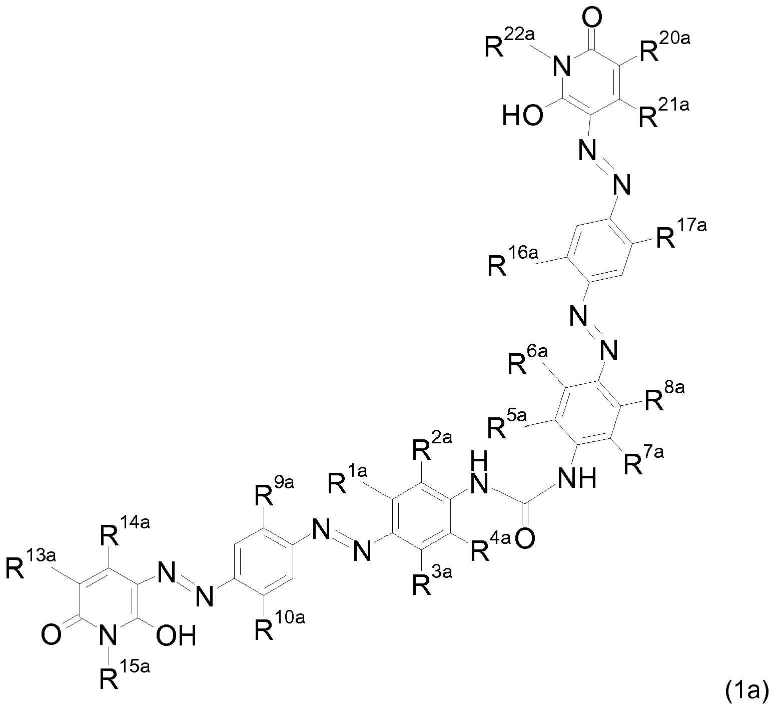 wherein
R^{1a}, R^{2a}, R^{3a}, R^{4a}, R^{5a}, R^{6a}, R^{7a} and R^{8a} independent of each other is hydrogen, alkyl, alkoxy, halogen, trifluoromethyl or SO₃M, whereby at least two of them are SO₃M,
R^{9a}, R^{10a}, R^{16a} and R^{17a} independent of each other is hydrogen, (C₁-C₄)-alkyl, (C₁-C₄)-alkoxy, halogen, trifluoromethyl, -S₃M or (C₁-C₄)-acylamino,
R^{13a} and R^{20a} independent of each other is cyano, carbamoyl or alkoxycarbonyl,
R^{14a} and R^{21a} independent of each other is unsubstituted, linear or branched (C₁-C₄)-alkyl, unsubstiuted (C₅-C₇)-cycloalkyl or substituted (C₅-C₇)-cycloalkyl with one or more substituents,
R^{15a} and R^{22a} independent of each other is hydrogen, alkyl, alkenyl, cycloalkyl, trifluoromethyl, aryl, heteroaryl, heterocycloalkyl, carbamoyl, sulfamoyl, amino, N-acylamino, ureido, alkylureido, phenylureido, N-monoalkylamino, N,N-dialkyl-amino, N-arylamino, N,N-diarylamino, N-alkyl-N-aryl-amino, N-monocycloalkylamino, N,N-dicycloalkylamino, N-alkyl-N-cycloalkyl-amino, N-aryl-N-cycloalkyl-amino, hydroxyakylsulfonylalkyl
or
alkyl interrupted by one or more heteroatoms selected from the group consisting of oxygen and sulphur
or
alkyl substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M
or
alkyl interrupted by one or more heteroatoms selected from the group consisting of oxygen and sulphur and substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M
and
M is hydrogen, an alkali metal, ammonium, one equivalent of an alkali earth metal or a monovalent organic cation.

3. Dye according to claim 1 or 2, wherein
R^{1a} and R^{6a} is SO₃M and R^{2a} and R^{5a} is hydrogen,
or R^{1a} and R^{6a} is hydrogen and R^{2a} and R^{5a} is SO₃M, R^{3a}, R^{4a}, R^{7a} and R^{8a} is hydrogen,
R^{9a}, R^{10a}, R^{16a} and R^{17a} independent of each other is hydrogen, methyl, halogen, -S₃M or acetylamino,
R^{13a} and R^{20a} independent of each other is cyano or carbamoyl,
R^{14a} and R^{21a} is methyl,
R^{15a} and R^{22a} independent of each other is methyl, ethyl, butyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentene-2-yl, 2-ethylhexyl, 2,2-dimethylpropyl, phenyl, benzyl, allyl, 2-methoxyethyl, 3-methoxypropyl, 2-cyanoethyl, 2-(methylthio)ethyl, 2-fluoroethyl, 2-chloroethyl, 3-chloropropyl, tetrahydrofurfuryl, 2-furan-2-yl-ethyl, 6-hydroxy-1-[2-(2-hydroxyethylsulfanyl)-ethyl], 2-(2-tertbutylsulfanylethanesulfonyl)-ethyl, 2-(ethylsulfonyl)ethanol, 2-hydroxyethoxypropyl or 2-hydroxyethoxyethyl
and
M is hydrogen, sodium, potassium, lithium or ammonium.

4. Process for the production of dyes according to claim 1, comprising
a) diazotization of a compound of formula (2) 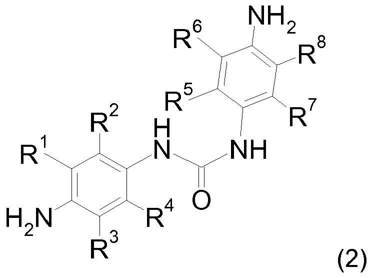 wherein R¹ to R⁸ are defined as in claim 1,
b) reacting diazonium salt obtained in step a) with the compounds of formula (3) and (4) 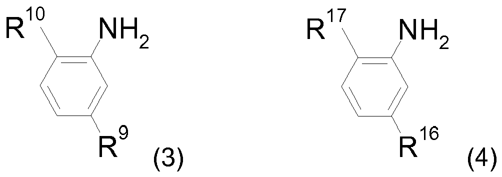 wherein R⁹, R¹⁰ and R¹⁶, R¹⁷ are defined as in claim 1, to yield an intermediate of formula (5) 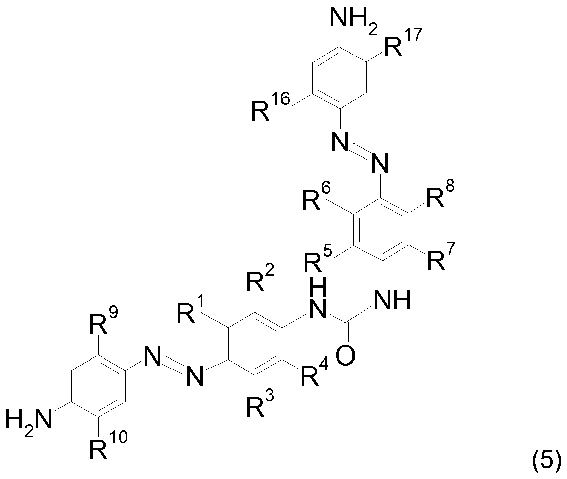
c) diazotization of the compound of formula (5),
d) reacting the diazonium salt obtained in step c) with the compounds of formula (6) and (7) 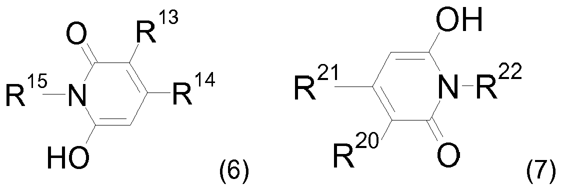
wherein R¹³ to R²² are defined as in claim 1.

5. Chemical composition comprising one or more dye(s) according to any one of claims 1 to 3.

6. Chemical composition consisting of two or more dyes according to any one of claims 1 to 3.

7. Aqueous solution for dying comprising one or more chemical compounds according to any one of claims 1 to 3.

8. Process for dyeing or printing carboxamido- and/or hydroxyl-containing material, comprising contacting the carboxamido- and/or hydroxyl-containing material with a dye according to any one of claims 1 to 3.

9. Ink for digital textile printing, comprising a dye according to any one of claims 1 to 3.

10. Use of a dye according to any one of claims 1 to 3, a chemical composition according to claim 5 or 6 or of an aqueous solution according to claim 7 for dying fibers, as well as blends of such fibres selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers.

11. Fiber and blends containing such fiber selected from the group consisting of:
synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers, and Lyocell fibers comprising one or more dye(s) according to any one of claims 1 to 3 either in chemically and/or physically bound form.
